(19) Europäisches Patentamt / European Patent Office / Office européen des brevets

(11) **EP 4 652 751 B1**

(12) **EUROPEAN PATENT SPECIFICATION**

(45) Date of publication and mention
of the grant of the patent:
**01.04.2026 Bulletin 2026/14**

(21) Application number: **24701163.8**

(22) Date of filing: **17.01.2024**

(51) International Patent Classification (IPC):
*H04R 1/34* (2006.01)  *B60N 2/879* (2018.01)
*H04R 1/40* (2006.01)  *H04R 5/02* (2006.01)

(52) Cooperative Patent Classification (CPC):
**H04R 1/347; B60N 2/879; H04R 1/403;**
H04R 5/023; H04R 2499/13

(86) International application number:
**PCT/EP2024/050955**

(87) International publication number:
**WO 2024/153659 (25.07.2024 Gazette 2024/30)**

(54) **LOUDSPEAKER ASSEMBLY**

LAUTSPRECHERANORDNUNG

ENSEMBLE HAUT-PARLEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.01.2023 GB 202300679**

(43) Date of publication of application:
**26.11.2025 Bulletin 2025/48**

(73) Proprietor: **PSS Belgium NV
9200 Dendermonde (BE)**

(72) Inventor: **CORYNEN, David
9200 Dendermonde (BE)**

(74) Representative: **Mewburn Ellis LLP
Aurora Building
Counterslip
Bristol BS1 6BX (GB)**

(56) References cited:
**WO-A1-2019/192816   WO-A1-2023/083711
JP-A- 2008 188 099   US-A1- 2015 201 260
US-A1- 2020 247 295**

**Description**

This application claims priority to GB2300679.4, filed 17 January 2023.

*Field of the Invention*

The present invention relates to a loudspeaker assembly.

*Background*

A dipole loudspeaker can be understood as a loudspeaker whose diaphragm has a first radiating surface and a second radiating surface, wherein the first radiating surface and the second radiating surface are located on opposite faces of the diaphragm, wherein a drive unit of the dipole loudspeaker is configured to move the diaphragm such that the first and second radiating surfaces produce bass sound which projects outwardly in opposite directions from the dipole loudspeaker.

It is known to incorporate a bass dipole loudspeaker in a headrest for the purpose of producing highly localised sound, see for example:

WO2019/121266*, which discloses a bass dipole loudspeaker suitable for incorporating into a car headrest;*

WO2021/249843*, which discloses another bass dipole loudspeaker suitable for incorporating into a car headrest;*

WO2022/048810*, which discloses another bass dipole loudspeaker suitable for incorporating into a car headrest;*

WO2022/048956*, which discloses a loudspeaker assembly that includes an bass dipole loudspeaker and adjustment mechanism configured to adjust a mounting frame suspension system so as to change the extent to which vibrations generated by the loudspeaker reach the mounting frame via the mounting frame suspension system when the loudspeaker is in use;*

WO2021/185777*, which discloses a mid-high frequency loudspeaker suitable for incorporating into a car headrest alongside a bass dipole loudspeaker;*

WO2023/030847*, which discloses another mid-high frequency loudspeaker suitable for incorporating into a car headrest alongside a bass dipole loudspeaker.*

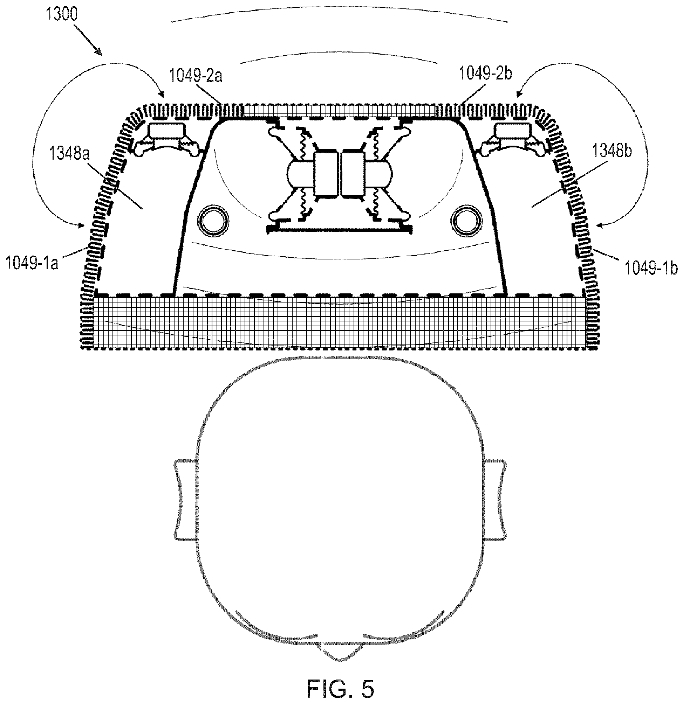

WO2023/174574*, which discloses another mid-high frequency loudspeaker suitable for incorporating into a car headrest alongside a bass dipole loudspeaker (see Figs. 5a-c).*

WO 2023/083711 discloses a loudspeaker assembly which includes a bass dipole loudspeaker mounted towards the rear face of the headrest (such that a first radiating surface of the diaphragm is, when the diaphragm is at rest, closer to the rear face of the headrest than to the front face of the headrest), together with a bass waveguide having a large forward-facing opening area (that is larger than the area of the first radiating surface as projected onto a plane perpendicular to a movement axis of the bass dipole loudspeaker). This loudspeaker assembly design helps to increase the sound pressure level (SPL) that can be produced by the bass dipole loudspeaker before a user whose head is located in front of the front face of the headrest experiences what is referred to in WO2023/083711 as "tactile fizzle". WO2019/192816 discloses a headrest comprising two back to back mounted loudspeakers for providing a dipole like sound radiation.

US2020/247295 discloses a vehicle head restraint incorporating speakers.

US2015/201260 discloses a vehicle headrest.

JP2008 188099 discloses a headrest structure.

The present invention has been devised in light of the above considerations, and builds upon the loudspeaker assemblies disclosed in WO2023/083711.

*Summary of the Invention*

In a first aspect, the present invention provides a loudspeaker assembly including:

a headrest having a front face facing in a forwards direction and a rear face facing in a rearwards direction, wherein the rearwards direction is opposite to the forwards direction, wherein the headrest is for use with a user's head located in front of the front face of the headrest;

a first bass dipole loudspeaker mounted to the headrest, wherein the first bass dipole loudspeaker includes a first drive unit and a first diaphragm, wherein the first diaphragm has a first radiating surface and a second radiating surface, wherein the first radiating surface and the second radiating surface of the first diaphragm are located on opposite faces of the first diaphragm, wherein the first drive unit is configured to move the first diaphragm along a first movement axis at bass frequencies such that the first and second radiating surfaces of the first diaphragm produce sound at bass frequencies;

a second bass dipole loudspeaker mounted to the headrest, wherein the second bass dipole loudspeaker includes a second drive unit and a second diaphragm, wherein the second diaphragm has a first radiating surface and a second radiating surface, wherein the first radiating surface and the second radiating surface of the second diaphragm are located on opposite faces of the second diaphragm, wherein the second drive unit is configured to move the second diaphragm along a second movement axis at bass frequencies such that the first and second radiating surfaces of the second diaphragm produce sound at bass frequencies;

at least one bass waveguide configured to guide bass sound produced by the first radiating surfaces of the first and second bass dipole loudspeakers out from the front face of the headrest via at least one forward-facing opening provided by the at least one bass waveguide;

wherein the first and second bass dipole loudspeakers are mounted to the headrest with the second radiating surface of the first bass dipole loudspeaker facing towards the second radiating surface of the second bass dipole loudspeaker, and such that bass sound produced by the second radiating surfaces of the first and second bass dipole loudspeakers is able to propagate out from the rear face of the headrest;

wherein a first area is defined by the first radiating surface of the first loudspeaker as projected onto a plane perpendicular to the first movement axis;

wherein a second area is defined by the first radiating surface of the second loudspeaker as projected onto a plane perpendicular to the second movement axis;

wherein the area of the at least one forward-facing opening is larger than the sum of the first and second areas.

As explained in more detail below, the at least one bass waveguide having a large forward-facing opening area (that is larger than the sum of the first and second areas) helps to increase the sound pressure level (SPL) that can be produced by the bass dipole loudspeaker before a user whose head is located in front of the front face of the headrest experiences what is referred to herein as "tactile fizzle".

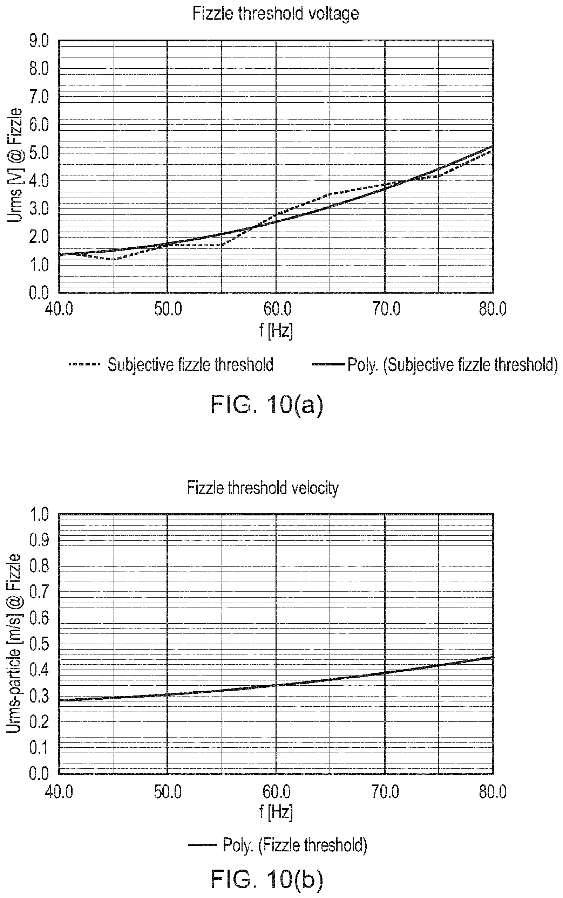

Herein, "tactile fizzle" refers to a tactile sensation experienced by a user whose head is close to the front face of a headrest incorporating bass dipole loudspeakers, which can be experienced as a quickly oscillating blowing sensation. As explained in more detail below, and without wishing to be bound by theory, the present inventor believes "tactile fizzle" is caused by high air particle velocity speeds which can be perceived by a user when the SPL produced by the bass dipole loudspeaker exceeds a certain threshold (see Fig. 10(a), which is discussed in more detail below). A user who perceives "tactile fizzle" may find the effect distracting or unpleasant.

Because a loudspeaker assembly according to the first aspect of the present invention is able to increase the SPL that can be produced by the bass dipole loudspeakers before a user whose head is located in front of the front face of the headrest experiences what is referred to herein as "tactile fizzle", the user is able to enjoy larger SPLs prior to experiencing "tactile fizzle". This may help to provide an improved listening experience.

By having the first and second dipole loudspeakers mounted with their second radiating surfaces facing each other, vibrations created by the first and second dipole loudspeakers can be cancelled when the loudspeaker is operated, without the need of an extra component (such as the second suspension disclosed in WO2019/121266). The extent to which these vibrations are cancelled will of course depend on whether the first and second movement axes are parallel to each other or inclined to each other (as described below).

A skilled person will appreciate that cancellation of such vibrations would generally require the loudspeaker assembly to be operated such that the first and second diaphragms are moved (at least partially) in opposite directions when the loudspeaker assembly is in use. In this context, first and second diaphragms moving along first and second movement axes which are inclined to each other can be considered as moving (partially) in opposite directions if there is a component of movement of the second diaphragm along the first movement axis which is opposite to movement of the first diaphragm along the first movement axis.

Preferably, the headrest may include a barrier which separates a space formed between the second radiating surfaces of the first and second bass dipole loudspeakers from the at least one forward-facing opening. This barrier may help to obstruct bass sound produced by the second radiating surfaces from interacting with bass sound produced by the first radiating surfaces within the at least one bass waveguide, thereby helping achieve a "cocooning" effect outside of the headrest.

Preferably, the first and second bass dipole loudspeakers are included in a loudspeaker module. The loudspeaker module may be mounted in the headrest. The first and second bass dipole loudspeakers may be mounted to each other within the loudspeaker module with the second radiating surface of the first bass dipole loudspeaker facing towards the second radiating surface of the second bass dipole loudspeaker, e.g. by attaching a frame of the first bass dipole loudspeaker to a frame of the second bass dipole loudspeaker. In some examples, the frame of the first bass dipole loudspeaker may be attached directly to the frame of the second bass dipole loudspeaker (e.g. as might be appropriate if the first and second movement axes are parallel to each other). In other examples, the frame of the first bass dipole loudspeaker may be attached to each other indirectly, e.g. via an intermediate frame (e.g. as might be appropriate if the first and second movement axes are inclined to each other, e.g. with a view to inclining the first and second movement axes at a small angle from a plane perpendicular to the forwards direction - see below).

The loudspeaker module may include a skirt. The skirt may extend between a periphery of the first bass dipole loudspeaker and a periphery of the second bass dipole loudspeaker. The skirt may serve as a barrier as described above (i.e. a barrier which separates a space formed between the second radiating surfaces of the first and second bass dipole loudspeakers from the at least one forward-facing opening). The skirt may include an opening which is configured to direct sound produced by the second radiating surfaces out from the rear face of the headrest. The loudspeaker module may include a gasket which surrounds the opening and is configured to form an air-tight connection to a corresponding opening in the rear face of the headrest.

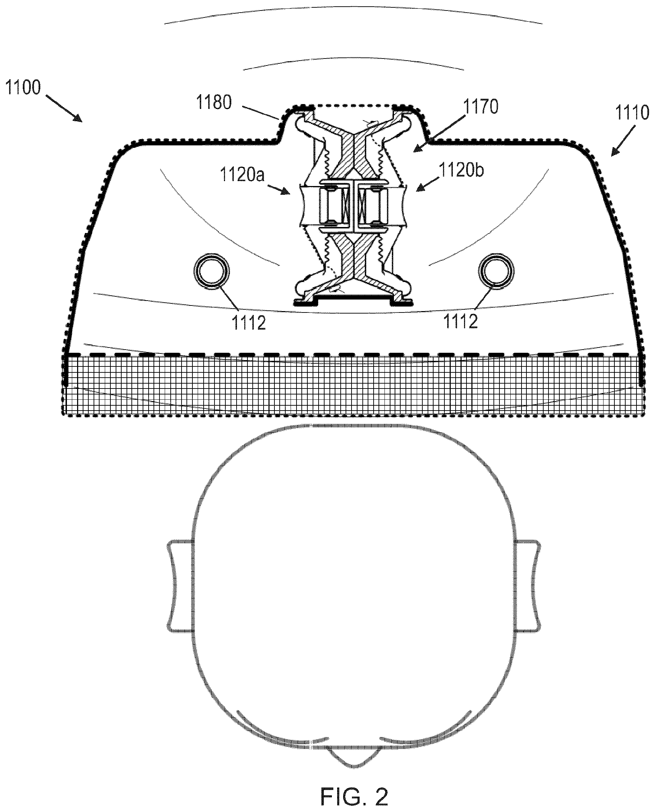

In some examples, the loudspeaker module may be mounted in the headrest (e.g. in the at least one bass waveguide of the headrest) such that the opening in the skirt of the loudspeaker module is located at the rear face of the headrest (see e.g. Fig. 2).

In some examples, the first and second bass dipole loudspeakers may be mounted to the headrest such that the first and second movement axes are parallel to each other, i.e. such that the first radiating surface of the first bass dipole loudspeaker faces directly away from the first radiating surface of the second bass dipole loudspeaker. In such examples, the first movement axis and the second movement axis may both lie in a plane perpendicular to the forwards direction.

In other examples, the first and second bass dipole loudspeakers may be mounted to the headrest such that the first and second movement axes are both inclined at a small angle, e.g. 70 degrees or less, preferably 45 degrees or less, more preferably 30 degrees or less, in some examples 20 degrees or less, from a plane perpendicular to the forwards direction. In such examples, the first and second movement axes are preferably inclined from the plane perpendicular to the forwards direction such that the first radiating surfaces of the first and second bass dipole loudspeakers are inclined towards the front face of the headrest (rather than being inclined towards the rear face of the headrest). The small angle may be greater than zero degrees.

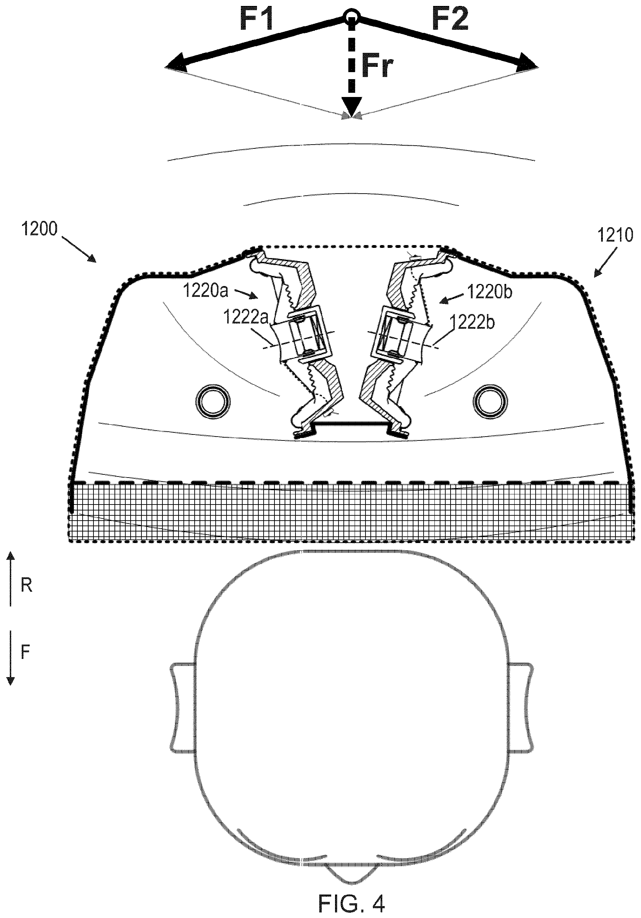

For avoidance of any doubt, it is possible for the second radiating surfaces of the first and second bass dipole loudspeakers to face towards each other, even if the first and second movement axes are both inclined at a small angle, from a plane perpendicular to the forwards direction (see e.g. Fig. 4).

In some examples, the headrest may include a single bass waveguide configured to guide bass sound produced by the first radiating surfaces of the first and second bass dipole loudspeakers out from the front face of the headrest via at least one forward-facing opening provided by the at least one bass waveguide. In such examples, the first and second bass dipole loudspeakers may be described as sharing the single bass waveguide. In such examples, the single bass waveguide may be the only bass waveguide included in the headrest.

In other examples, the headrest may include a first bass waveguide and a second bass waveguide, wherein the first bass waveguide is configured to guide bass sound produced by the first radiating surface of the first bass dipole loudspeaker out from the front face of the headrest via a first forward-facing opening provided by the first bass waveguide, and wherein the second bass waveguide is configured to guide bass sound produced by the first radiating surface of the second bass dipole loudspeaker out from the front face of the headrest via a second forward-facing opening provided by the second bass waveguide. In such examples, the first and second bass dipole loudspeakers may be described as having separate bass waveguides.

If the first and second bass dipole loudspeakers have separate bass waveguides as described above, then preferably:

the area of the first forward-facing opening is larger than the first area;
the area of the second forward-facing opening is larger than the second area.

The bass frequencies at which the first and second drive units are configured to move the first and second diaphragms preferably include frequencies across the range 60-80Hz, more preferably frequencies across the range 50-100Hz, more preferably frequencies across the range 40-100Hz, and may include frequencies across the range 40-160Hz. The first and second drive units may be configured to move the first and second diaphragm at frequencies that do not exceed 250Hz, 200Hz, or even 160Hz, in order to ensure the loudspeaker achieves a desired level of "cocooning", e.g. as described in WO2019/121266.

Moving the diaphragms at frequencies below 40Hz may be useful for some applications, but not for others (such as in a car, where below 40Hz background noise tends to be too loud).

The first and second bass dipole loudspeakers may be subwoofers, i.e. the first bass dipole loudspeaker may be a first subwoofer and the second bass dipole loudspeaker may be a second subwoofer. The first subwoofer and the second subwoofer may be configured to produce sound only at bass frequencies.

Herein, the term "forwards-facing" may be taken to mean facing in the forwards direction.

Herein, the term "rearwards-facing" may be taken to mean facing in the rearwards direction.

The front face of the headrest may be understood to mean a face of the headrest that is on an outermost surface of the headrest and which faces in the forwards direction.

The rear face of the headrest may be understood to mean a face of the headrest that is on an outermost surface of the headrest and which faces in the rearwards direction.

The sum of the first and second areas may be 50cm$^2$ or more, more preferably 80cm$^2$ or more, more preferably 100cm$^2$ or more, more preferably 150cm$^2$ or more, more preferably 200cm$^2$ or more.

With areas in these ranges, an effective personal sound cocoon at bass frequencies can be achieved for reasons that can be understood e.g. from WO2019/121266.

In some examples, the first area may, instead of being defined by the first radiating surface of the first loudspeaker as projected onto a plane perpendicular to the first movement axis, be defined as the effective radiating surface area of the first radiating surface of the first bass dipole loudspeaker.

Similarly, the second area may, instead of being defined by the first radiating surface of the second loudspeaker as projected onto a plane perpendicular to the second movement axis, be defined as the effective radiating surface area of the first radiating surface of the second bass dipole loudspeaker.

As is known in the art, for a diaphragm having a circular perimeter which is suspended from a loudspeaker support structure by a roll suspension having an outer diameter $d_o$ and an inner diameter $d_i$, the effective radiating surface area of a radiating surface of that diaphragm may be estimated as $S_D = \pi \left(\frac{d}{2}\right)^2$, where d is the half-diameter of the roll suspension, $(d_o + d_i)/2$.

Alternatively, or for more complex diaphragm geometries, the effective radiating surface area of a diaphragm $S_D$ may be measured using known techniques, see e.g. "Dynamical Measurement of the Effective Radiating area SD", Klippel GmbH (https://www.klippel.de/fileadmin/klippel/Files/Know_How/Application_Notes/AN_32_Effective_Radiation_Area.pdf).

Although it is possible to define the first and second areas using an effective radiating surface area of the first and second diaphragms, instead of using projected areas,, it may be preferable not to make this replacement, to avoid complex calculations regarding effective radiating surface area (since the two area measurements are, in practice, similar to each other, and therefore essentially the same considerations apply).

The first and second bass dipole loudspeakers are preferably mounted to the headrest such that a shortest distance between the first radiating surfaces of the first and second bass dipole loudspeakers and the rear face of the headrest is smaller than the shortest distance between the first radiating surfaces of the first and second bass dipole loudspeakers and the front face of the headrest.

In other words, the first and second bass dipole loudspeakers are preferably mounted to the headrest such that they are closer to the rear face of the headrest than they are to the front face of the headrest. This has been found to help to further reduce/avoid "tactile fizzle". Positioning the first and second bass dipole loudspeakers towards the rear of the headrest may lead to the headrest incorporating a bulge to accommodating the first and second bass dipole loudspeakers, see e.g. Figs. 2, 4, 6.

In some examples, the headrest may include one or more mounting pins for mounting the headrest to a seat. If the headrest includes one or more mounting pins, the first and second bass dipole loudspeakers are preferably mounted to the headrest in a position such that the first and second drive units of the first and second dipole loudspeakers are rearwards, preferably entirely rearwards, of the one or more mounting pins. In general, this will mean that most of the first and second loudspeakers (by volume) are rearwards of the mounting pins, which is good for reducing/avoiding "tactile fizzle".

In some examples, the first and second bass dipole loudspeakers are mounted to the headrest in a position such that the first and second loudspeakers are partially rearwards of the one or more mounting pins (preferably with the first and second drive units entirely rearwards of the one or more mounting pins)/ In other examples, the first and second bass dipole loudspeakers may be mounted to the headrest in a position such that the first and second loudspeakers are entirely rearwards of the one or more mounting pins.

The headrest may include a rigid chassis, wherein the at least one bass waveguide is formed at least in part by the rigid chassis.

In some examples, the first and second bass dipole loudspeakers may be mounted at or to a rear face of the rigid chassis. For example, the first and second bass dipole loudspeakers may be mounted to a rear face of the rigid chassis by mounting a loudspeaker module that includes the first and second bass dipole loudspeakers to the rear face of the rigid chassis. If the rear face of the rigid chassis provides the rear face of the headrest, then the first and second bass dipole loudspeakers mounted to or at a rear face of the rigid chassis may be considered to be mounted substantially at the rear face of the headrest (see e.g. Figs. 2, 4).

The area of the at least one forward-facing opening may be taken to be the area enclosed by projecting the contour of the/each forward-facing opening onto a plane perpendicular to the forwards direction.

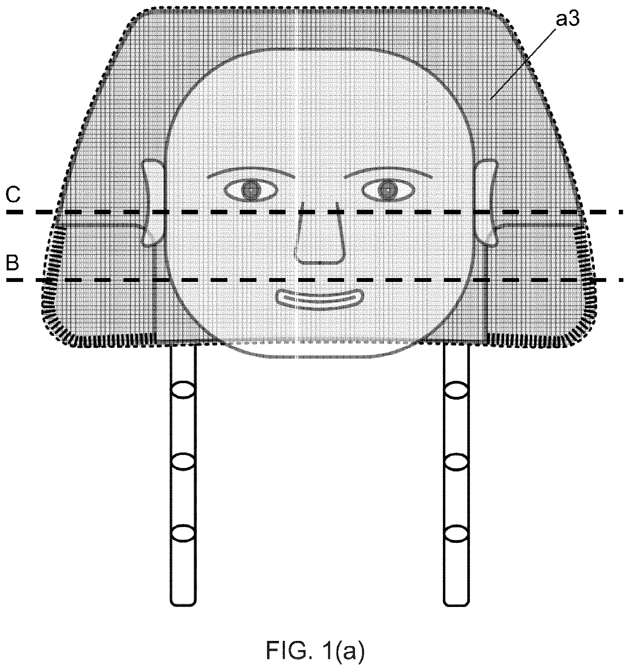

Thus, if the at least one bass waveguide has a single forward-facing opening (see e.g. Figs. 1(a)-(c), 2, 4, 5, 6), the area of the at least one forward-facing opening provided by the bass waveguide may be taken to be the area enclosed by projecting the contour of the single forward-facing opening onto a plane perpendicular to the forwards direction.

Similarly, if the bass waveguide has more than one forward-facing opening (not shown in the drawings of this disclosure, but see e.g. Fig. 9a of WO2023/083711), then the area of the at least one forward-facing opening may be taken to be the sum of the areas enclosed by projecting the contour of each forward-facing opening onto a plane perpendicular to the forwards direction.

The bass waveguide may include at least one rearward-facing opening. The at least one rearward-facing opening of the bass waveguide may be configured to allow sound produced by the second radiating surfaces of the first and second bass dipole loudspeakers to propagate out of the waveguide, e.g. as may be appropriate if the first and second bass dipole loudspeakers are mounted in the bass waveguide (see e.g. Figs. 1(a)-(c), 2, 4, 5, 6). In other examples, the at least one rearward-facing opening of the bass waveguide may be configured to allow sound produced by the first radiating surfaces of the first and second bass dipole loudspeakers to propagate into the waveguide, e.g. as may be appropriate if the first and second bass dipole loudspeakers are mounted outside the bass waveguide on the rear face of the headrest (not shown).

In some examples, the bass waveguide may contain one or more regions of material which are configured to allow bass sound to propagate therethrough substantially uninhibited. Since such regions of material allow bass sound to propagate therethrough, their presence can be ignored for the purposes of determining the area of the at least one forward-facing opening. This is not shown in the drawings of this application, but see e.g. Fig. 9a of WO2023/083711 where the foam material which fills the forward-facing openings (which is configured to allow bass sound to propagate therethrough substantially uninhibited) can be ignored when determining the area of the forward-facing opening provided by the bass waveguide.

In some examples, the at least one forward-facing opening may be covered by one or more regions of material which are configured to allow bass sound to propagate therethrough substantially uninhibited. Again, since such regions of material allow bass sound to propagate therethrough substantially uninhibited, their presence can be ignored for the purposes of determining the area of the at least one forward-facing opening. See e.g. Figs. 1(a)-(c), 2, 4, 5, 6, where the forward-facing opening is covered by a grille and a foam material which are configured to allow bass sound to propagate therethrough substantially uninhibited, and as such the grille and foam material can be ignored when determining the area(s) of the forward-facing opening(s) provided by the bass waveguides.

Herein, a grille may be viewed as being configured to allow bass sound to propagate therethrough substantially uninhibited if it is at least 20% open. Herein, a region of material having a specific airflow resistance of 50 Pa·s/m or less can be considered as a region of material which is configured to allow bass sound to propagate therethrough substantially uninhibited.

As noted above, the headrest may include a rigid chassis, wherein the at least one bass waveguide is formed at least in part by the rigid chassis.

The rigid chassis may include the at least one forward-facing opening.

The rigid chassis may include one or more walls configured to guide bass sound produced by the first radiating surfaces of the first and second dipole loudspeakers towards the at least one forward-facing opening of the at least one bass waveguide.

The one or more walls of the rigid chassis may include one or more solid walls.

The one or more walls of the rigid chassis may include one or more perforated walls, covered with a portion of non-rigid material configured to guide bass sound produced by the first radiating surfaces (of the first and second loudspeakers) towards the at least one forward-facing opening of the at least one bass waveguide (see below for possible properties of the portion of non-rigid material configured to guide bass sound produced by the first radiating surface towards the at least one forward-facing opening of the bass waveguide).

The one or more walls of the rigid chassis may include one or more regions in which a width of the/each bass waveguide (e.g. as measured in a direction perpendicular to the forwards direction) gradually widens in the forwards direction. This may help provide improved loudspeaker performance compared with a non-gradual widening.

The at least one forward-facing opening of the rigid chassis may be covered by a front grille (e.g. a front grille of the rigid chassis) that is configured to allow bass sound to propagate therethrough substantially uninhibited. The front grille may be covered by one or more regions of material which are configured to allow bass sound to propagate therethrough substantially uninhibited. The front grille may be covered by one or more regions of material configured to provide support to a user (e.g. support foam). The one or more regions of material configured to provide support to a user may be configured to inhibit the propagation of bass sound therethrough.

In some examples, the at least one forward-facing opening of the rigid chassis may serve as the at least one forward-facing opening of the at least one bass waveguide (see e.g. Figs. 1(a)-(c), 2, 4, 5, 6).

The rigid chassis may include at least one rearward-facing opening which faces in the rearwards direction.

The rigid chassis may include at least one rearward-facing opening. In some examples, the at least one rearward-facing opening of the rigid chassis may serve as the at least one rearward-facing opening of the at least one bass waveguide (see e.g. Figs. 1(a)-(c), 2, 4, 5, 6).

The rigid chassis may include one or more walls configured to guide bass sound produced by the second radiating surfaces towards the at least one rearward-facing opening of the rigid chassis. But such walls are optional, since, for example, bass sound produced by the second radiating surfaces may be guided towards the at least one rearward-facing opening of the rigid chassis by a barrier (e.g. a skirt of a loudspeaker module) as described above (see e.g. Figs. Figs. 1(a)-(c), 2, 4, 5, 6).

The at least one rearward-facing opening of the rigid chassis may be covered by a rear grille (e.g. a rear grille of the rigid chassis) that is configured to allow bass sound to propagate therethrough substantially uninhibited. The rear grille may be covered by one or more regions of material which are configured to allow bass sound to propagate therethrough substantially uninhibited. In some examples, the rear face of the rigid chassis may provide (in part of entirely) the rear face of the headrest (see e.g. Figs. 1(a)-(c), 2, 4, 5). In other examples, the rear grille may be covered by one or more regions of material which are configured to inhibit the propagation of bass sound therethrough (not shown).

The bass waveguide may include one or more portions of non-rigid material configured to guide bass sound produced by the first radiating surfaces towards the at least one forward-facing opening of the at least one bass waveguide (not shown in the drawings of this disclosure, but see e.g. Fig. 9a of WO2023/083711).

In order to guide bass sound, the one or more portions of non-rigid material should be configured to inhibit the propagation of bass sound therethrough. By way of example, the one or more portions of non-rigid material may include one or more portions of a material configured to provide support to a user, e.g. an open-cell support foam.

The one or more portions of non-rigid material may include one or more walls configured to guide bass sound produced by the first radiating surfaces towards the at least one forward-facing opening of the at least one bass waveguide.

The one or more walls of non-rigid material may include one or more regions in which a width of the/each bass waveguide gradually widens in the forwards direction.

The one or more portions of non-rigid material may be used in combination with a rigid chassis, or may be used instead of a rigid chassis (not shown).

The one or more portions of non-rigid material may provide the at least one forward-facing opening of the at least one bass waveguide (not shown in the drawings of this disclosure, but see e.g. Fig. 9a of WO2023/083711).

The one or more portions of non-rigid material may be formed of a material (e.g. a foam material) having a specific airflow resistance that is higher than 50Pa·s/m, more preferably 100Pa·s/m or higher. With a specific airflow resistance that is higher than 50Pa·s/m, more preferably 100Pa·s/m or higher, the one or more portions of non-rigid material can be considered to be acoustically closed to bass frequencies.

The one or more portions of non-rigid material may (optionally in addition to previously described features concerning the specific airflow resistance of the one or more portions of non-rigid material) have a specific airflow resistance that is 500Pa·s/m or lower, since this may allow the one or more walls to allow mid-high frequency sound to propagate therethrough substantially uninhibited.

But it is also possible for the one or more portions of non-rigid material to have a specific airflow resistance that is 500Pa·s/m or higher, which may cause the one or more walls to be absorbent to mid-high frequency sound. This can help to dampen mid-high frequency resonances that may otherwise occur in the bass waveguide, if at least one mid-high frequency loudspeaker is mounted in the bass waveguide (see below).

The area of the at least one forward-facing opening of the at least one bass waveguide may be at least 1.5 times larger than the sum of the first and second areas.

The area of the at least one forward-facing opening of the at least one bass waveguide may be at least 2 times larger than the sum of the first and second areas.

The area of the at least one forward-facing opening of the at least one bass waveguide may be at least 3 times larger than the sum of the first and second areas.

The area of the at least one forward-facing opening of the sum of the first and second bass waveguide may be at least 4 times larger than the sum of the first and second areas.

This helps to further raise the SPL threshold at which "tactile fizzle" may be perceived.

The headrest may include one or more additional components of the loudspeaker assembly. The one or more additional components of the loudspeaker assembly may include, for example, an electronic circuit board, an amplifier, a shaker, a motor (e.g. for headrest positioning, massaging function or ventilation).

The drive unit of the first bass dipole loudspeaker may be an electromagnetic drive unit that includes a first magnet unit configured to produce a magnetic field in a first air gap, and a first voice coil attached to the first diaphragm, wherein the first voice coil is configured to sit in the first air gap when the first diaphragm is at rest. When the first loudspeaker is in use, the first voice coil may be energized (have an electric current passed through it) to produce a magnetic field which interacts with the magnetic field produced by the first magnet unit and which causes the first voice coil (and therefore the first diaphragm) to move relative to the first magnet unit along the first movement axis. Such drive units are well known.

The drive unit of the second bass dipole loudspeaker may be an electromagnetic drive unit that includes a second magnet unit configured to produce a magnetic field in a second air gap, and a second voice coil attached to the second diaphragm, wherein the second voice coil is configured to sit in the second air gap when the second diaphragm is at rest. When the second loudspeaker is in use, the second voice coil may be energized (have an electric current passed through it) to produce a magnetic field which interacts with the magnetic field produced by the second magnet unit and which causes the second voice coil (and therefore the second diaphragm) to move relative to the second magnet unit along the second movement axis.

In some examples, the first and second magnet units may be located between the second radiating surface of the first bass dipole loudspeaker and the second radiating surface of the second bass dipole loudspeaker. In this case, the first and second bass dipole loudspeaker may be referred to as being mounted "back to back" since the radiating surface of a dipole loudspeaker that does not have the magnet unit located in front of it (i.e. the first radiating surface, in this case) is typically thought of as the front face of the dipole loudspeaker. This arrangement may help to reduce motor operating noises being audible to a user whose head is located in front of the front face of the headrest.

The headrest may include a first bass dipole loudspeaker frame from which the first diaphragm of the first bass dipole loudspeaker is suspended by one or more first suspension elements.

The headrest may include a second bass dipole loudspeaker frame from which the second diaphragm of the second bass dipole loudspeaker is suspended by one or more second suspension elements.

The rigid chassis (discussed above) may serve as both the first and second bass dipole loudspeaker frame. Alternatively, the first and second bass dipole loudspeaker frames may be separate elements which are respectively suspended from the rigid chassis. A variety of possible suspension arrangements are disclosed in the previous applications discussed in the background section (above) and need not be discussed further herein.

The headrest may include one or more mid-high frequency loudspeakers.

Mid-high frequency loudspeakers may be understood herein as loudspeakers configured to produce sound in the mid-high frequency range, where the mid-high frequency range may include frequencies in the range 500Hz-2kHz, more preferably 300Hz-3kHz.

In some examples, the/each mid-high frequency loudspeaker may be located within the at least one bass waveguide. For example, the/each mid-high frequency loudspeaker and the first and second bass dipole loudspeakers may be located within a single bass waveguide (not shown in the drawings of this disclosure, but see e.g. Figs. 7a, 9a, 10a, 11a of WO2023/083711). This can help to save space within the headrest, and help to maximise the area of the forward-facing opening of the bass waveguide.

In some examples, the/each mid-high frequency loudspeaker may be located within a region of the at least one bass waveguide provided by the rigid chassis (not shown in the drawings of this disclosure, but see e.g. Figs. 7a, 9a, 10a, 11a of WO2023/083711). Again, this can help to save space within the headrest.

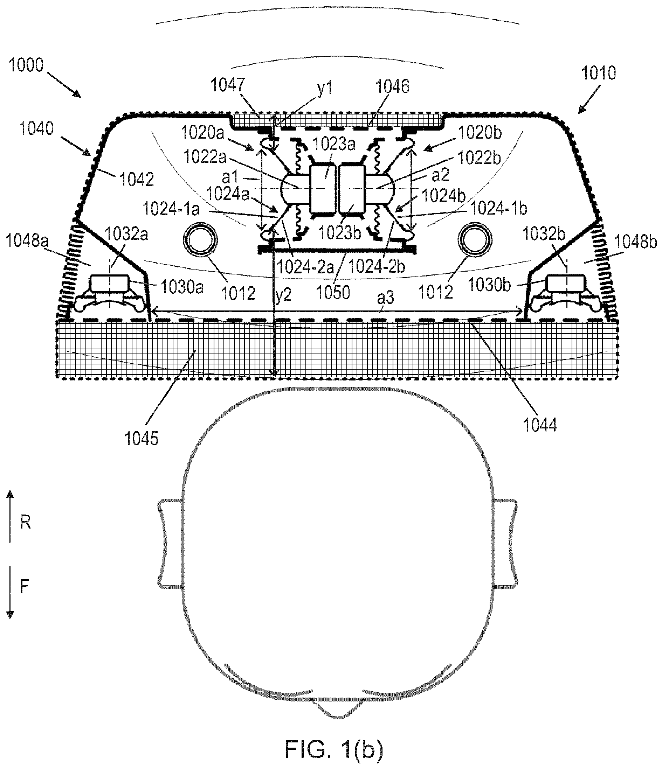

In other examples, the/each mid-high frequency loudspeaker may be located outside of the at least one bass waveguide (see e.g. Figs. 1(b), 5, 6).

In general, the present inventor believes that it is preferable to have the/each mid-high frequency loudspeaker located outside of the at least one bass waveguide if the/each mid-high frequency loudspeaker is configured as a cardioid-like mid-high frequency loudspeaker with porous material at the back, e.g. as disclosed in WO2021/185777, since it is believed that locating such cardioid-like mid-high frequency loudspeakers in the at least one bass waveguide may jeopardize the directivity from the mid high loudspeakers. But if the mid-high frequency loudspeakers are configured as ordinary monopoles, then it may be preferable to mount the mid-high frequency loudspeakers in the at least one bass waveguide.

In some examples, a first set of one or more mid-high frequency loudspeakers may be located within a region of the at least one bass waveguide provided by the rigid chassis, and a second set of one or more mid-high frequency loudspeakers may be located outside of the at least one bass waveguide.

In some examples, the/each mid-high frequency loudspeaker may be a loudspeaker as described in WO2021/185777 or WO2023/030847, for example. In this case, the/each mid-high frequency loudspeaker is preferably mounted with space around a front face and rear face of the mid-high frequency loudspeaker, to allow interaction between the sound produced by the first and second radiating surfaces of the mid-high frequency loudspeaker (as taught in WO2021/185777, for example).

In some examples where at least one mid-high frequency loudspeaker is mounted in the at least one bass waveguide, a porous material may be mounted proximate to the/each mid-high frequency loudspeaker, for example, to provide absorption of mid-high frequency sound at suitable locations in the bass waveguide. This might be appropriate, for example, if one or more walls of the bass waveguide are reflective to mid-high frequency sound (but is less likely to be appropriate if the one or more walls of the bass waveguide are absorbent for mid-high frequency sound, see e.g. Fig. 10a of WO2023/083711).

In a second aspect, a loudspeaker module for use in a loudspeaker assembly is provided. The loudspeaker module may be configured for use in a loudspeaker assembly according to the first aspect of the invention. The loudspeaker module may have any feature described in relation to the first aspect of the invention.

For example, the loudspeaker module may, for example, include:

a first bass dipole loudspeaker mounted to the headrest, wherein the first bass dipole loudspeaker includes a first drive unit and a first diaphragm, wherein the first diaphragm has a first radiating surface and a second radiating surface, wherein the first radiating surface and the second radiating surface of the first diaphragm are located on opposite faces of the first diaphragm, wherein the first drive unit is configured to move the first diaphragm along a first movement axis at bass frequencies such that the first and second radiating surfaces of the first diaphragm produce sound at bass frequencies;

a second bass dipole loudspeaker mounted to the headrest, wherein the second bass dipole loudspeaker includes a second drive unit and a second diaphragm, wherein the second diaphragm has a first radiating surface and a second radiating surface, wherein the first radiating surface and the second radiating surface of the second diaphragm are located on opposite faces of the second diaphragm, wherein the second drive unit is configured to move the second diaphragm along a second movement axis at bass frequencies such that the first and second radiating surfaces of the second diaphragm produce sound at bass frequencies;

wherein the first and second bass dipole loudspeakers are mounted to each other within the loudspeaker module with the second radiating surface of the first bass dipole loudspeaker facing towards the second radiating surface of the second bass dipole loudspeaker;

wherein the loudspeaker module includes a skirt which extends between a periphery of the first bass dipole loudspeaker and a periphery of the second bass dipole loudspeaker.

Preferably the skirt includes an opening which is configured to direct sound produced by the second radiating surfaces out from the rear face of the headrest, when the loudspeaker module is mounted in a headrest that includes a front face and a rear face. The loudspeaker module may include a gasket which surrounds the opening and is configured to form an air-tight connection to a corresponding opening in the rear face of the headrest.

In a third aspect, the present invention may provide a seat assembly that comprises:

a seat for seating a user; and

a loudspeaker assembly according to the first aspect, wherein the headrest of the loudspeaker assembly is used as a headrest of the seat.

The seat may be configured to position a user who is sat down in the seat such that the head of the user is located in front of the front face of the headrest, for example with the head of the user being located within 30cm, more preferably within 20cm, from the front face of the headrest.

## *Summary of the Figures*

Embodiments and experiments illustrating the principles of the invention will now be discussed with reference to the accompanying figures in which:

**Figs. 1(a)-(c)** show a first loudspeaker assembly according to the present invention.
**Fig. 2** shows a second loudspeaker assembly according to the present invention.
**Figs. 3(a)-(b)** show a loudspeaker module for use in the second loudspeaker assembly of Fig. 2.
**Fig. 4** shows a third loudspeaker assembly according to the present invention.
**Fig. 5** shows a fourth loudspeaker assembly according to the present invention.
**Fig. 6** shows a fifth loudspeaker assembly according to the present invention.
**Fig. 7** shows a non-exhaustive selection of loudspeaker forms that could be used in the loudspeaker assemblies disclosed herein.

## *Detailed Description of the Invention*

Aspects and embodiments of the present invention will now be discussed with reference to the accompanying figures. Further aspects and embodiments will be apparent to those skilled in the art.

The following examples seek to provide a loudspeaker assembly including a headrest which is able to provide a personal sound "cocoon" in which a listener in close proximity of the headrest is able to experience full range audio, whilst such sound is significantly suppressed for listeners further away from the headrest. Compared to the known examples discussed in the background section (above), the bass element of this sound can be enhanced, because a higher sound pressure level (SPL) at bass frequencies can be achieved with reduced "tactile fizzle".

Figs. 1(a)-(c) show a first loudspeaker assembly 1000 according to the present invention.

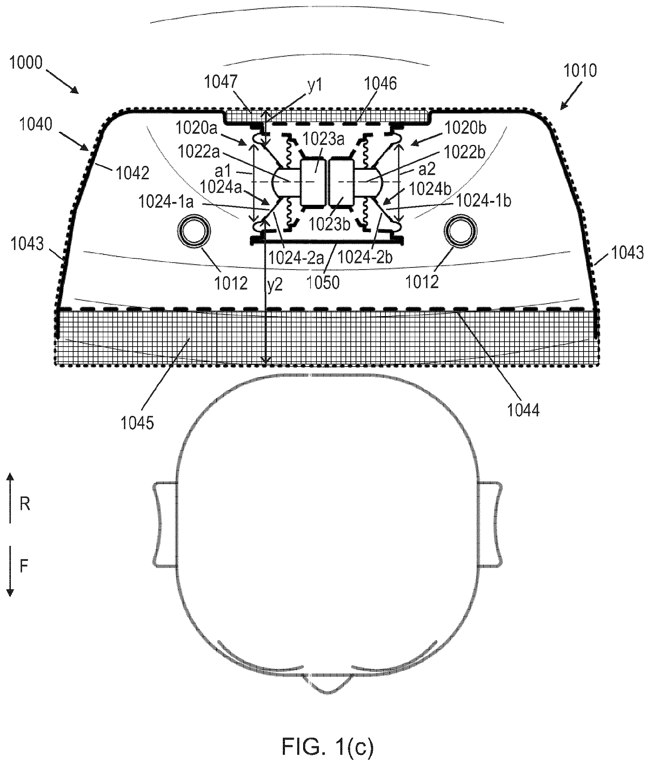

Fig. 1(b) is a cross section taken along the line B shown in Fig. 1(a), and Fig. 1(c) is a cross section taken along the line C shown in Fig. 1(a).

In the loudspeaker assembly 1000 of Fig. 1, there is a headrest 1010 having two bass dipole loudspeakers 1020a, 1020b and two mid-high frequency loudspeakers 1030a, 1030b mounted thereto.

A forwards direction F and a rearwards direction R are both indicated on Fig. 1(b)-(c), along with movement axes 1022a, 1022b of the bass dipole loudspeakers 1020a, 1020b and movement axes 1032a, 1032b of the mid-high frequency loudspeakers 1030a, 1030b.

The first bass dipole loudspeaker 1020a includes a first drive unit 1023a and a first diaphragm 1024a, wherein the first diaphragm 1024a has a first radiating surface 1024-1a and a second radiating surface 1024-2a, wherein the first radiating surface 1024-1a and the second radiating surface 1024-2a of the first diaphragm 1024a are located on opposite faces of the first diaphragm 1024a, wherein the first drive unit 1023a is configured to move the first diaphragm 1024a along the first movement axis 1022a at bass frequencies such that the first and second radiating surfaces 1024-1a, 1024-2a of the first diaphragm 1024a produce sound at bass frequencies.

A first area a1 is defined by the first radiating surface 1024-1a of the first loudspeaker 1020a as projected onto a plane perpendicular to the first movement axis 1022a.

The second bass dipole loudspeaker 1020b includes a second drive unit 1023b and a second diaphragm 1024b, wherein the second diaphragm 1024b has a first radiating surface 1024-1b and a second radiating surface 1024-2b, wherein the first radiating surface 1024-1b and the second radiating surface 1024-2b of the second diaphragm 1024b are located on opposite faces of the second diaphragm 1024b, wherein the second drive unit 1023b is configured to move the second diaphragm 1024b along the second movement axis 1022b at bass frequencies such that the first and second radiating surfaces 1024-1b, 1024-2b of the second diaphragm 1024b produce sound at bass frequencies.

A second area a2 is defined by the first radiating surface 1024-1b of the second loudspeaker 1020b as projected onto a plane perpendicular to the first movement axis 1022b.

In this example, the first and second dipole loudspeakers 1020a, 1020b are mounted back-to-back, with first and second magnet units (the first magnet unit belonging to the first drive unit 1023a, and the second magnet unit belonging to the second drive unit 1023b) being located between the second radiating surfaces 1024-2a, 1024-2b of the first and second bass dipole loudspeakers 1020a, 1020b.

Having the first and second dipole loudspeakers 1020a, 1020b mounted back-to-back can cancel vibrations created by the loudspeakers during operation, without the need of an extra component (such as the second suspension disclosed in WO2019/121266) albeit at the cost of a less shallow integration into the headrest 1010.

In this example, the first and second bass dipole loudspeakers 1020a, 1020b are mounted to the headrest 1010 such that the first and second movement axes 1022a, 1022b are parallel to each other, i.e. such that the first radiating surface 1024-1a of the first bass dipole loudspeaker 1020a faces directly away from the first radiating surface 1024-1b of the second bass dipole loudspeaker 1020b. In this example, the first movement axis 1022a and the second movement axis 1022b both lie in a plane perpendicular to the forwards direction.

The headrest 1010 includes two mounting pins 1012 for mounting the headrest 1010 to a seat (not shown), as is standard for most car seats.

In this example, the headrest 1010 includes a rigid chassis 1040, which is attached to the mounting pins 1012.

The rigid chassis 1040 includes solid walls 1042, a forward-facing opening at the front of the headrest 1010 covered by a front grille 1044, and a rearward-facing opening at the rear of the headrest 1010 covered by a rear grille 1046.

The forward-facing opening of the rigid chassis 1040 is covered by a layer of foam material 1045 which is attached to the front grille 1044. In this example, the foam material 1045 is an open-cell foam having a specific airflow resistance of 50Pa·s/m or lower, and is thus configured to allow bass sound to propagate therethrough substantially uninhibited.

The rearward-facing opening of the rigid chassis 1040 is covered by a layer of foam material 1047 which is attached to the rear grille 1046. In this example, the foam material 1047 is an open-cell foam having a specific airflow resistance of 50Pa·s/m or lower, and is thus configured to allow bass sound to propagate therethrough substantially uninhibited.

The first and second bass dipole loudspeakers 1020a, 1020b are mounted to a rear face of the rigid chassis 1040.

The headrest 1010 includes a barrier 1050 which separates a space formed between the second radiating surfaces 1024-2a, 1024-2b of the first and second bass dipole loudspeakers 1020a, 1020b from the at least one forward-facing opening. This barrier 1050 helps to obstruct bass sound produced by the second radiating surfaces 1024-2a, 1024-2b from interacting with bass sound produced by the first radiating surfaces 1024-1a, 1024-1b within the at least one bass waveguide, thereby helping achieve a "cocooning" effect outside of the headrest 1010. This barrier 1050 also helps to guide bass sound produced by the second radiating surfaces 1024-2a, 1024-2b of the bass dipole loudspeakers 1020a, 1020b to the rearward-facing opening of the rigid chassis 1040.

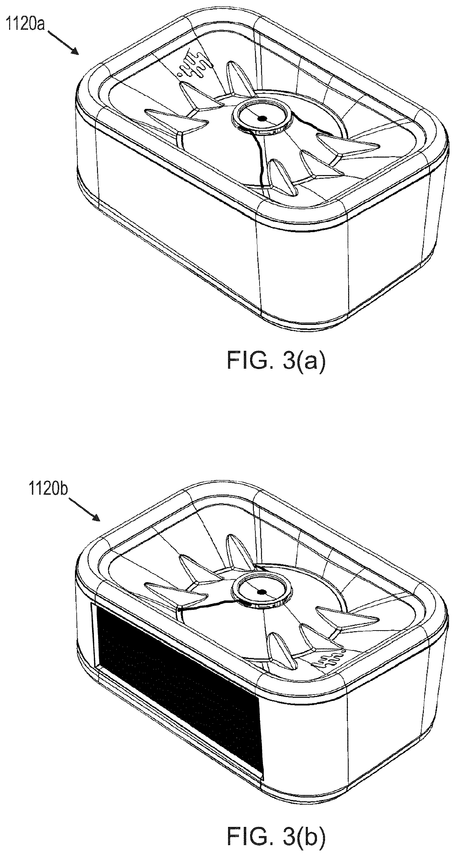

The barrier 1050 may be provided by a skirt of a loudspeaker module, e.g. as described with reference to Figs. 3(a)-(b).

The solid walls 1042 are configured to guide bass sound produced by first radiating surfaces 1024-1a, 1024-1b of the bass dipole loudspeakers 1020a, 1020b to the forward-facing opening of the rigid chassis 1040.

In this example, a bass waveguide is formed by the one or more solid walls 1042 of the rigid chassis 1040, with the forward-facing opening of the rigid chassis 1040 serving as a forward-facing opening of the bass waveguide, and with the rearward-facing opening of the rigid chassis 1040 serving as a rearward-facing opening of the bass waveguide. Thus, the one or more solid walls 1042 of the rigid chassis 1040 are configured to guide bass sound produced by the first radiating surfaces 1024-1a, 1024-1b of the bass dipole loudspeakers 1020a, 1020b out from the front face of the headrest 1010 via the forward-facing opening of the bass waveguide.

The rigid chassis 140 also includes two wing portions 1048a, 1048b, with each mid-high frequency loudspeaker 1030a, 1030b being mounted in a respective wing portion 1048a, 1048b. Each wing portion 1048a, 1048b is acoustically separated from the bass waveguide but are open at the sides. These side openings are then covered with a suitable resistive material so that a desired delay for the rearward waves of the mid high loudspeakers is established to achieve a cardioid like directivity, e.g. as discussed in WO2021/185777. Each wing portion 1048a, 1048b has a respective forward-facing opening. The front grille 1044 covered by the layer of foam material 1045 extend across the forward-facing openings of the wing portions 1048a, 1048b, as can be seen e.g. in Fig. 1(b).

The mid-high frequency loudspeakers 1032a, 1032b are highly directive, in view of the frequency band in which they operate, and their directivity may be further improved by following the teaching in WO2021/185777 for example.

The bass dipole loudspeakers 1020a, 1020b are not highly directive but, following the teaching of WO2019/121266, provide good SPL to a user in close proximity (e.g. sat in a seat incorporating the headrest) and suppressed SPL for anyone located further away.

The area a3 of the forward-facing opening of the rigid chassis 1040 is larger than the sum of the first and second areas a1 + a2. This helps to increase the SPL that can be produced by the bass dipole loudspeakers 1020a, 1020b before a user whose head is located in front of the front face of the headrest 1010 experiences what is referred to herein as "tactile fizzle".

In this example, the front of the rigid chassis 1040 includes a flared portion 1043 best shown in Fig. 1(c). The flared portion 1043 helps to maximise the area of the forward-facing opening of the bass waveguide, which helps to ensure that a3 > a1 + a2, and also helps to reduce "tactile fizzle".

In this example, a1 = 60cm$^2$, a2 = 60cm$^2$, a3 = 370cm$^2$.

In this example, the first and second bass dipole loudspeakers 1020a, 1020b are mounted to the headrest 1010 such that the shortest distance y1 between the first and second bass dipole loudspeakers 1020a, 1020b and the rear face of the headrest 1010 is smaller than the shortest distance y2 between the first and second bass dipole loudspeakers 1020a, 1020b and the front face of the headrest 1010. In other words, the first and second bass dipole loudspeakers 1020a, 1020b are mounted to the headrest 1010 such that they are closer to the rear face of the headrest 1010 than they are to the front face of the headrest 1010. Indeed, in this example, the first and second drive units 1023a, 1023b of the first and second dipole loudspeakers 1020a, 1020b are entirely rearwards of the mounting pins 1012. This has been found to play an important role in reducing/avoiding "tactile fizzle".

Fig. 2 shows a second loudspeaker assembly 1100 according to the present invention.

The loudspeaker assembly 1100 shown in Fig. 2 is similar to that shown in Figs. 1(a)-(c), and corresponding features have been given corresponding reference numerals.

In the second loudspeaker assembly 1100 of Fig. 2, the bass dipole loudspeakers 1120a, 1120b have larger radiating surface areas compared with the first loudspeaker assembly 1000 of Figs. 1(a)-(c), to increase performance at bass frequencies. To allow the bass waveguide to guide the soundwaves out of the whole front surface of the bass waveguide, the loudspeakers 1120a, 1120b are mounted further to the back of the headrest 1110, so that a bulge 1180 is created locally on the rear face of the headrest 1110 for that purpose.

Figs. 3(a)-(b) show a loudspeaker module 1170 for use in the second loudspeaker assembly of Fig. 2.

The loudspeaker module 1170 includes the first and second loudspeakers 1120a, 1120b of Fig. 2, wherein the first and second bass dipole loudspeakers 1120a, 1120b are mounted to each other within the loudspeaker module 1170 with the second radiating surface of the first bass dipole loudspeaker 1120a facing towards the second radiating surface of the second bass dipole loudspeaker 1120b. The loudspeaker module includes a skirt which extends between a periphery of the first bass dipole loudspeaker and a periphery of the second bass dipole loudspeaker.

The skirt includes an opening which is configured to direct sound produced by the second radiating surfaces out from the rear face of the headrest 1110, when the loudspeaker module 1170 is mounted in the headrest 1110 of Fig. 2. The loudspeaker module 1170 may include a gasket which surrounds the opening and is configured to form an air-tight connection to a corresponding opening in the rear face of the headrest 1110.

In this example each loudspeaker in the module 1170 has a width of 93mm, a height of 135mm and a depth of 30mm. The effective radiating surface of each loudspeaker is 102cm$^2$, so the total surface area for the module is 204cm$^2$.

Parameters for each loudspeaker are:

Sd 102cm$^2$ - effective radiating surface area

Re 3,4ohm - DC resistance of voice coil

Bl 2.1Tm - motor force

Mms 9g - total mass of moving parts

Cms 1.4mm/N - total compliance of diaphragm suspension

Fs 45Hz - resonance frequency of Mms with Cms

Qms 4.4 - mechanical damping factor

Le 0.2mH - voice coil inductance

Xmech 6mm - maximum mechanical stroke of diaphragm in one direction

In the examples shown in Figs. 1-6, the bass waveguide has a front opening area of 370cm$^2$.

In practice, the loudspeaker module 1170 shown in Fig. 3 may be rigidly fixed to the headrest structure built around the headrest pins 1112. This rigid fixing is preferably be sufficient to withstand any crash event, e.g. in a similar way as height adjustment motors or other elements that may be integrated in a modern headrest. Here it is worth noting that, today, luxury headrests have many items fixed inside them and can be made safe in this way. In the case of the loudspeaker module 1170, safety is helped by the orientation of the loudspeakers. In particular, since a loudspeaker module 1170 as shown in Fig. 3 contains the heavy parts of the loudspeaker in a way that in an event of a crash creating large forces in a forwards/rearwards direction they could be expected to move towards a wall of the module 1170. Also, the orientation of the forces during such a crash will try to move the magnet system sideways towards the frame of the loudspeaker and thus will be less likely to come loose from the frame. This is an extra safety feature as compared to an arrangement in which the front face of the loudspeaker is oriented towards the front of the headrest, in which case only a paper diaphragm may be in front of the heavy part (magnet system) of the loudspeaker which could increase the likelihood of the magnet system separating from a loudspeaker during a crash event.

Fig. 4 shows a third loudspeaker assembly 1200 according to the present invention.

In this example, the first and second movement axes 1222a, 1222b of the first and second bass dipole loudspeakers 1220a, 1220b are mounted to the headrest 1210 such that the first and second movement axes 1222a, 1122b are both inclined at a small angle, in this case 15 degrees, from a plane perpendicular to the forwards direction. Here, the first and second movement axes 1222a, 1222b are inclined from the plane perpendicular to the forwards direction such that the first radiating surfaces of the first and second bass dipole loudspeakers 1220a, 1220b face towards the front face of the headrest 1210, as well as with the second radiating surfaces facing towards each other.

This has two effects: first it increases the rear area through which the bass waves can propagate outwards, this can be useful to reduce friction and or blowing noises, and secondly one can introduce a controlled amount of vibrations acting on the headrest during operation, F1 and F2 sum together in the resulting force Fr. The utility of controlling such vibrations has already been discussed in WO2022/048956.

Fig. 5 shows a fourth loudspeaker assembly 1300 according to the present invention.

The fourth loudspeaker assembly 1300 is similar to the first loudspeaker assembly 1000 of Figs. 1(a)-(c), except the wing portions 1348a, 1348b have been modified to include porous side wall portions 1049-1a, 1049-1b and porous rear wall portions 1049-2a, 1049-2b which define a waveguide. These porous side wall and rear wall portions 1049-1a, 1049-1b, 1049-2a, 1049-2b are provided by a grille covered by porous material having a specific airflow resistance in the range 1000-10000 Pa.s/m. This arrangement can help provide highly directive mid-high frequency sound for reasons explained with reference to Figs. 5a-c of WO2023/174574.

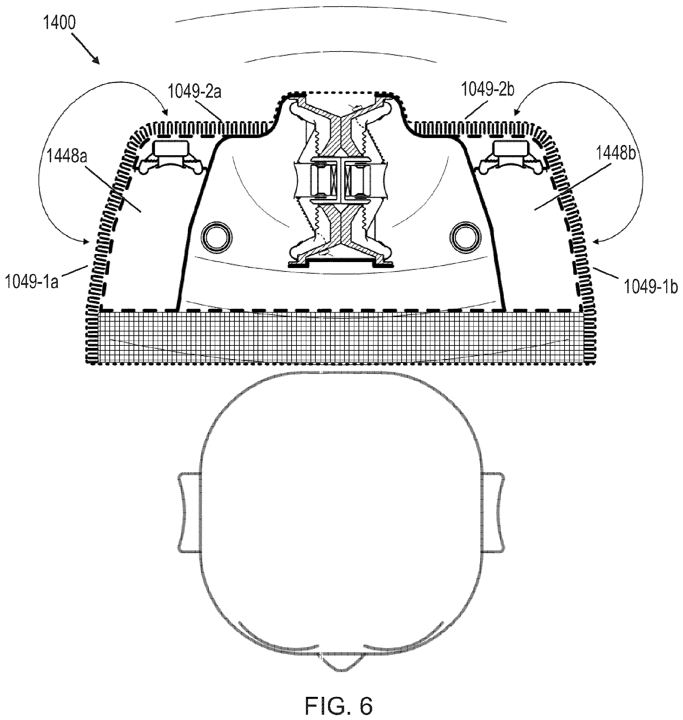

Fig. 6 shows a fifth loudspeaker assembly 1400 according to the present invention.

The fifth loudspeaker assembly 1400 is similar to the second loudspeaker assembly 1100 of Fig. 2, except that the wing portions 1448a, 1448b have been modified to match those of Fig. 5.

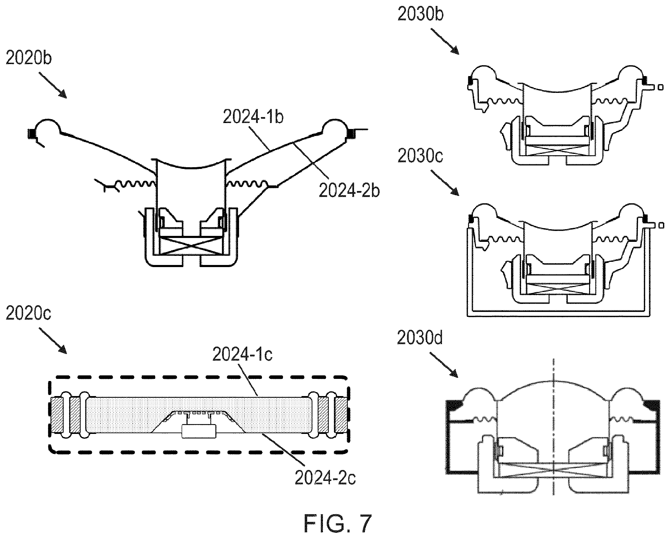

Fig. 7 shows a non-exhaustive selection of loudspeaker forms that could be used in the loudspeaker assemblies disclosed herein.

In some examples, it would be possible to use a traditional cone loudspeaker 2020b (with an open rear, so that it acts as a dipole) as shown in Fig. 7 as a bass dipole loudspeaker in one of the loudspeaker assemblies disclosed herein.

In other examples, it would be possible to use the bass dipole loudspeaker 2020c as shown in Fig. 7 as a bass dipole loudspeaker in one of the loudspeaker assemblies disclosed herein. The bass dipole loudspeaker 2020c as shown in Fig. 7 is a bass dipole loudspeaker as disclosed in WO2019/121266 (see Fig. 10a of WO2019/121266 and corresponding explanation thereof), but many other potential forms of bass dipole loudspeaker are possible, e.g. as disclosed in WO2019/121266 and other documents discussed in the background section.

Thus it may be understood that the particular form of bass dipole loudspeaker is not believed important to this invention, though we have for completeness labelled a first radiating surface 2024-1b, 2024-1c and a second radiating surface 2024-2b, 2024-2c on each of the bass dipole loudspeakers 2020b, 2020c.

In some examples, it would be possible to use a mid-high frequency loudspeaker 2030b without a housing as a mid-high frequency loudspeaker in one of the loudspeaker assemblies disclosed herein.

In some examples, it would be possible to use a mid-high frequency loudspeaker 2030c in a closed box that will act substantially as a monopole in one of the loudspeaker assemblies disclosed herein.

In other examples, it would be possible to use the mid-high frequency loudspeaker 2030d as a mid-high frequency loudspeaker in one of the loudspeaker assemblies disclosed herein. The mid-high frequency loudspeaker 2030d as shown in Fig. 7 is a highly directive (cardioid-like) mid-high frequency loudspeaker as disclosed in WO2021/185777 (see Fig. 5 of WO2021/185777 and corresponding explanation thereof), but many other potential forms of mid-high frequency loudspeaker are possible, e.g. as disclosed in WO2021/185777 and other documents discussed in the background section.

Thus it may be understood that the particular form of mid-high frequency loudspeaker is not believed important to this invention.

Any of the above-described loudspeaker assemblies may be incorporated into a seat, e.g. with the headrest of the loudspeaker assembly serving as a headrest of the seat. In such arrangements, the seat may be configured to position a user who is sat down in the seat such that the head of the user is located in front of the front face of the headrest.

*Experimental data*

The following discussion sets out experimental data taken from WO2023/083711, which provides evidence and examples relating to tactile fizzle. Although the examples shown are not in accordance with the present invention, the experimental data does help to show the problems caused by tactile fizzle, and further show why a bass waveguide with a large forward-facing area (compared with the size of diaphragm(s) generating the bass sound) and why mounting the loudspeaker(s) towards the rear of the bass waveguide helps to reduce tactile fizzle.

In this experimental data:

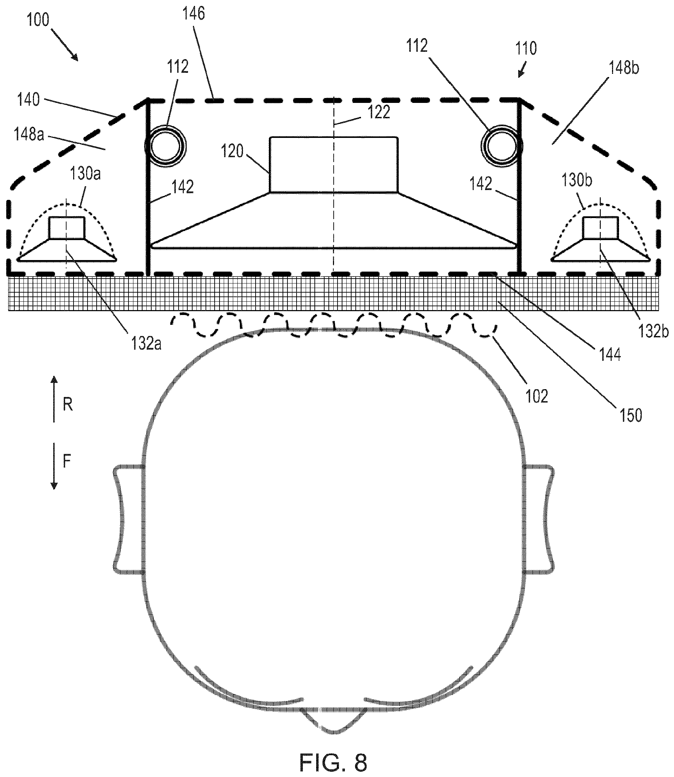

**Fig. 8** shows a test loudspeaker assembly designed by the present inventor in accordance with principles taken from known examples.

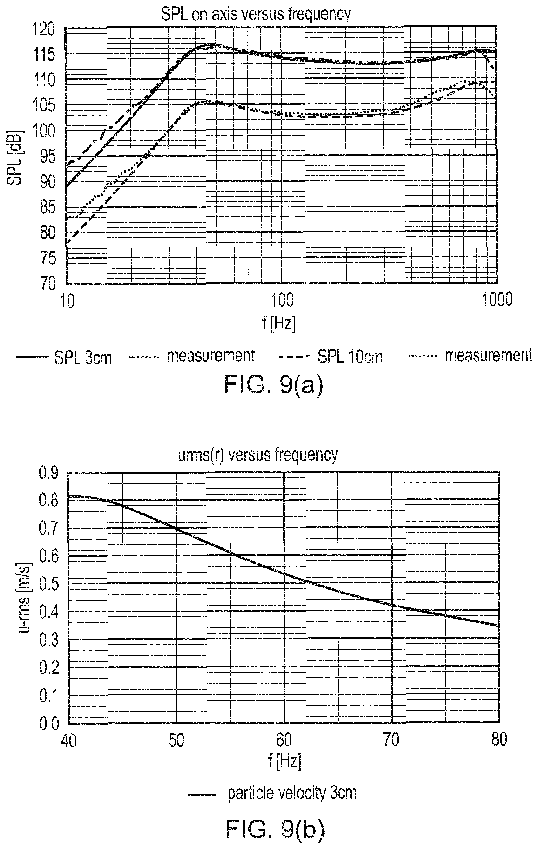

**Figs. 9(a)-(b)** show results (actual and calculated) obtained for the bass dipole loudspeaker of Fig. 8.

**Figs. 10(a)-(b)** show the results of experimental work performed using the bass dipole loudspeaker of Fig. 1.

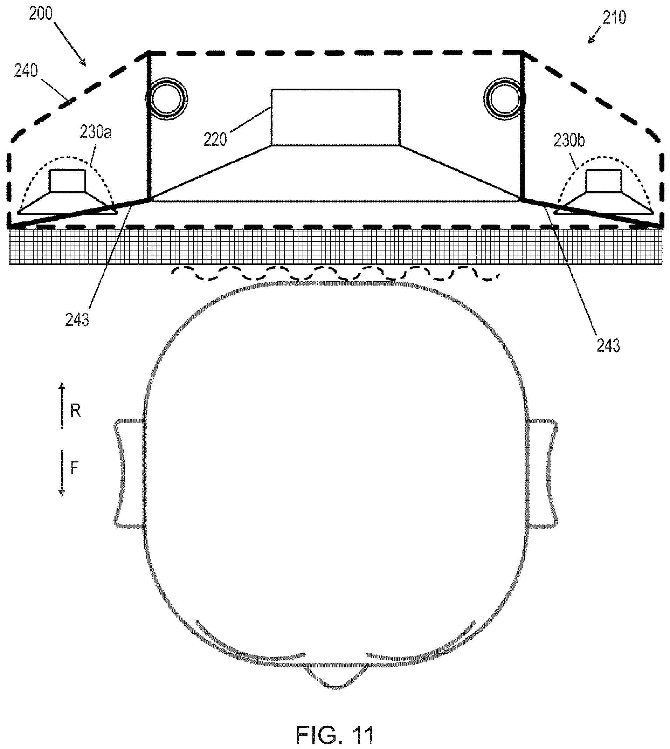

**Fig. 11** shows a loudspeaker assembly which implements a first attempt by the present inventor to reduce the impact of "tactile fizzle".

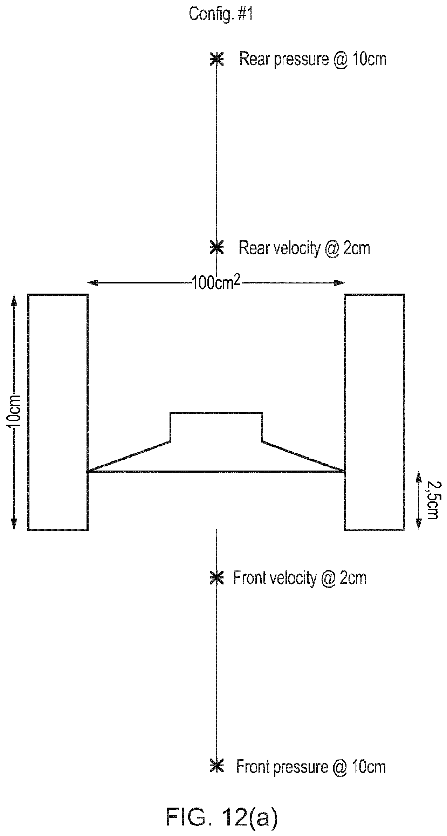

**Figs. 12(a)-(b)** show a variety of loudspeaker assembly configurations used in finite element method (FEM) simulations performed by the inventor.

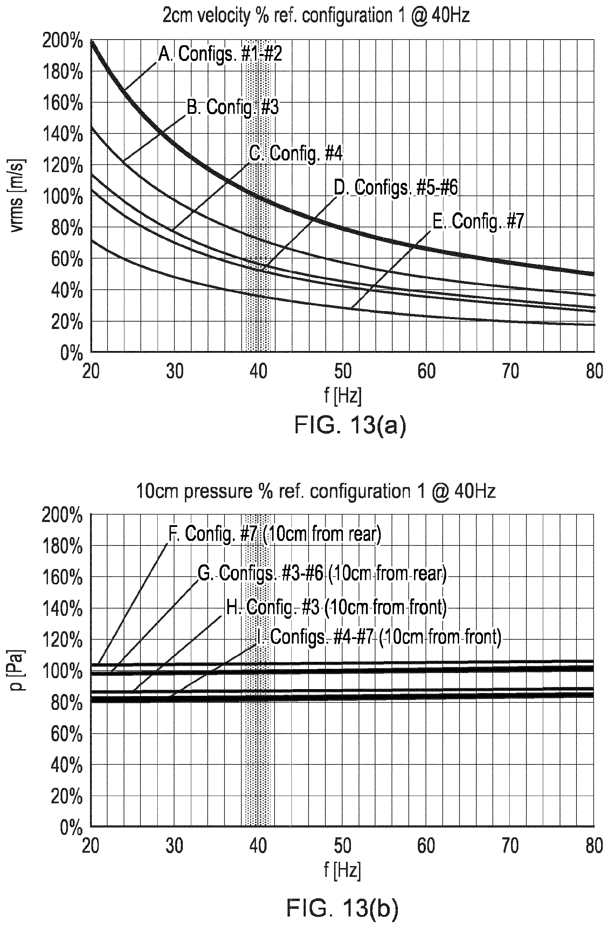

**Figs. 13(a)-(b)** show the results of the FEM simulations performed using the loudspeaker assembly configurations shown in Figs. 12a-b.

Fig. 8 shows a loudspeaker assembly 100 designed by the present inventor in accordance with principles taken from the known examples discussed in the background section.

In the loudspeaker assembly 100 of Fig. 8, there is a headrest 110 having one bass dipole loudspeaker 120 and two mid-high frequency loudspeakers 130a, 130b mounted thereto.

The headrest 110 includes two mounting pins 112 for mounting the headrest 110 to a seat (not shown), as is standard for most car seats.

In this example, the headrest 110 includes a rigid chassis 140, which is attached to the mounting pins 112.

The rigid chassis 140 includes solid walls 142, a forward-facing opening at the front of the headrest 110 covered by a front grille 144, and a rearward-facing opening at the rear of the headrest 110 covered by a rear grille 146.

The solid walls 142 are configured to guide bass sound produced by a first radiating surface of the bass dipole loudspeaker 120 to the forward-facing opening of the rigid chassis 140 and to guide bass sound produced by a second radiating surface of the bass dipole loudspeaker 120 to the rearward-facing opening of the rigid chassis 140.

The forwards direction F and the rearwards direction R are both indicated on Fig. 8, along with a movement axis 122 of the bass dipole loudspeaker 120 and movement axes 132a, 132b of the mid-high frequency loudspeakers 130a, 130b.

In this example, a bass waveguide is formed by the one or more solid walls 142 of the rigid chassis 140, with the forward-facing opening of the rigid chassis 140 serving as a forward-facing opening of the bass waveguide, and with the rearward-facing opening of the rigid chassis 140 serving as a rearward-facing opening of the bass waveguide. Thus, the one or more solid walls 142 of the rigid chassis 140 are configured to guide bass sound produced by a first radiating surface of the bass dipole loudspeaker 120 out from the front face of the headrest 110 via the forward-facing opening of the bass waveguide.

In this example, the one or more solid walls 142 of the rigid chassis 140 are also configured to guide bass sound produced by a second radiating surface of the bass dipole loudspeaker 120 out from the rear face of the headrest 110 via the rearward-facing opening of the bass waveguide.

As such, the bass dipole loudspeaker 120 is mounted to the headrest 110 in a position that is forwards of the mounting pins 112, such that the mounting pins 112 are located between the bass dipole loudspeaker 120 and the rear face of the headrest 110.

The rigid chassis 140 also includes two acoustically open (by being perforated) wing portions 148a, 148b, with each mid-high frequency loudspeaker 130a, 130b being mounted in a respective wing portion 148a, 148b.

The forward-facing opening of the rigid chassis 140 is covered by a layer of foam material 150 (e.g. an open-cell foam having a specific airflow resistance of 50Pa·s/m or lower) which is configured to allow bass sound to propagate therethrough substantially uninhibited.

The mid-high frequency loudspeakers 132a, 132b are highly directive, in view of the frequency band in which they operate, and their directivity may be further improved by following the teaching in WO2021/185777 for example.

The bass dipole loudspeaker 120 is not highly directive but, following the teaching of WO2019/121266, provides good SPL to a user in close proximity (e.g. sat in a seat incorporating the headrest) and suppressed SPL for anyone located further away.

When testing the loudspeaker assembly 100 depicted in Fig. 8, the inventor detected what is referred to herein as "tactile fizzle" when their head was positioned in front of the headrest 110 (in a position that might reasonably be expected to be occupied by a head of a user sat in a seat incorporating the headrest 110). The phenomenon of "tactile fizzle" has already been explained above, and "tactile fizzle" is represented by the pictogram 102 in Fig. 8.

In particular, when the loudspeaker assembly 100 was used to reproduce bass frequencies at relatively loud levels (above 95dB measured at 10cm in front of the headrest), the present inventor detected a "tactile fizzle" at the back of their head and neck. The present inventor observed that this could be perceived as annoying by users, and could jeopardize the listening experience at higher SPL levels.

Without wishing to be bound by theory, the present inventor believes that particle velocity exceeding a certain threshold is the cause of this "tactile fizzle".

Experimental measurements were performed on a test loudspeaker assembly 100 according to Fig.1 in which the bass dipole loudspeaker 120 had an effective radiating surface area of 125cm$^2$. Further details of the bass dipole loudspeaker 120 used are shown in Table 1.

Table 1.

| Sd [cm$^2$] | Fs [Hz] | Mms [g] | Qms | Re [Ω] | BL [Tm] | Le [mH] | Urms [V] |
|---|---|---|---|---|---|---|---|
| **125.00** | **40.00** | **11.28** | **6.76** | **2.89** | **2.14** | **0.20** | **4.00** |

The parameters referenced in Table 1 were as follows

Sd = effective radiating surface area of the first and second radiating surfaces of the bass dipole loudspeaker [cm$^2$]

Fs = resonance frequency of the bass dipole loudspeaker's mobile system [Hz]

Mms = moving mass including air load of the bass dipole loudspeaker's mobile system [g]

Qms = mechanical quality factor of the bass dipole loudspeaker's mobile system [dimensionless]

Re = electrical resistance of the voice coil [ohm]

BL = product of magnet field strength and wire length indicating motor strength [Tm]

Le = inductance of motor [mH]

Urms = applied (RMS) voltage to bass unit [V]

Fig. 9(a) shows the frequency response obtained using the test loudspeaker assembly 100 with the bass dipole loudspeaker 120 having the above parameters.

In Fig. 9(a):

The upper dotted line was measured at 3cm in front of the headrest 110, with the upper solid line being the calculated response at this distance.

The lower dotted line was measured at 10cm in front of the headrest 110 with the lower solid line being the calculated response at this distance.

The calculated response was calculated using a simulation. That there are only minor variations between the dotted curves and the solid lines in Fig. 9(a) show that the measurements are roughly in line with the theoretical calculation.

Fig. 9(b) shows the calculated particle velocity at 3cm from the headrest 110. The same simulation producing the upper SPL curve shown in Fig. 9(a) was used to calculate the results shown in Fig. 9(b).

As shown by Fig. 9(b), the bass dipole loudspeaker 120 produces higher particle velocities (Urms = root mean squared velocity in m/s) at lower frequencies. Without wishing to be bound by theory, it is believed this is because the bass dipole loudspeaker 120 needs to move more air at lower frequencies to produce the same SPL (according to known physical principles).

Fig. 10(a) shows the result of an experiment in which bass frequencies between 40Hz and 80Hz were generated with incremental voltage levels until a noticeable "tactile fizzle" could be detected on the back of the head/neck by the present inventor.

To produce the results shown in Fig. 10(a), the present inventor's head was located at a distance of 1cm to 3cm approximately from the front face of the headrest 110 of the loudspeaker assembly 100 shown in Fig. 8.

Once the "tactile fizzle" was detected, the corresponding voltage supply level was noted, with these empirical values being indicated by the dotted line in Fig. 10(a).

The solid line shown in Fig. 10(a) is a second order polynomial that fits the empirical values.

From the polynomial voltage levels indicated by the solid line shown in Fig. 10(a), the particle velocity was calculated shown in Fig. 10(b).

From Figs. 10(a) and 10(b), one may conclude that particle velocity levels in proximity of the back of the head or neck from ~0.3m/s onwards may empirically be detected by a user as "tactile fizzle", albeit this has been determined with an element of subjectivity, given that different users may perceive "tactile fizzle" at different thresholds.

However, regardless of an individual's personal threshold for detecting "tactile fizzle", the present inventor found that reproducing music using the loudspeaker assembly 100 of Fig. 8 with bass levels exceeding 95dB (measured at 10cm from the front of the headrest) led to multiple users complaining about "tactile fizzle", indicating that regardless of possible threshold differences amongst users, practically all of them were noticing "tactile fizzle" at some point during louder listening.

Fig. 11 shows a loudspeaker assembly 200 which implements a first attempt by the present inventor to reduce the impact of "tactile fizzle" (e.g. by raising the SPL threshold before "tactile fizzle" is first perceived).

In this example, the front of the rigid chassis 240 includes a flared portion 243 which flares outwards, such that the area of the forward-facing opening of the bass waveguide is greater than in the example shown in Fig. 8.

The incorporation of the flared portion 243 in the loudspeaker assembly 200 of Fig. 11 was found to increase the SPL threshold at which "tactile fizzle" was first perceived by a listener a little bit, but not by a large amount, compared with the loudspeaker assembly 100 of Fig. 8. Without wishing to be bound by theory, the present inventor believes this is because the back of the user's head is still in close proximity to the diaphragm of the bass dipole loudspeaker 220. Additionally, cut-outs had to be made in the flared portions 243 to accommodate the mid-high frequency loudspeakers 230a, 230b and to allow sound produced by the first and second radiating surfaces of each mid-high frequency loudspeaker 230a, 230b to interact (which may be useful if the mid-high frequency loudspeakers are as disclosed in WO2021/185777).

Finite element method (FEM) simulations were performed to confirm these predictions.

Fig. 12(a) shows a first loudspeaker assembly configuration used in the FEM simulations, referred to herein as "Config. #1".

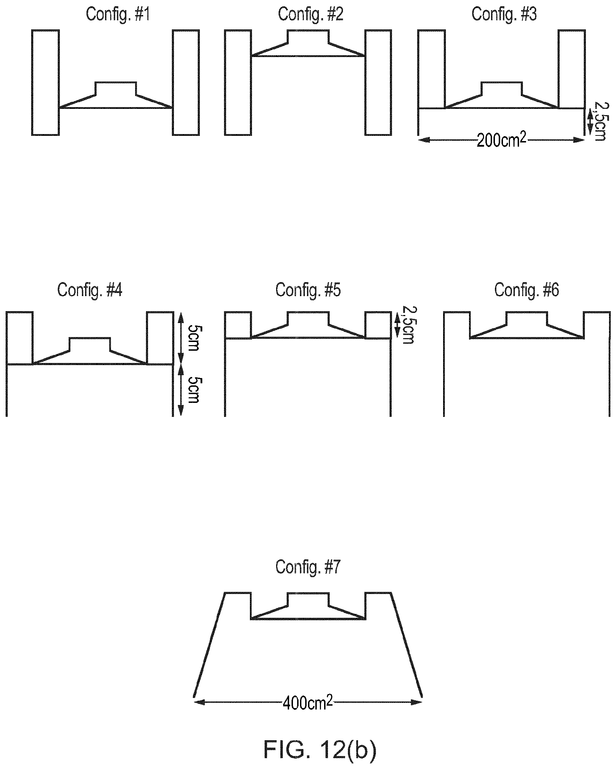

Fig. 12(b) shows first-seventh loudspeaker assembly configurations used in the FEM simulations, referred to herein as "Config. #1" - "Config. #7".

Fig. 12(a) illustrates dimensions for the simulated bass waveguide of Config. #1, as well as locations at which results were obtained using the simulations, with particle velocity evaluated at 2cm from the forward-facing and rearward-facing openings while sound pressure was evaluated at 10cm from the forward-facing and rearward-facing openings.

As depicted in Fig. 12(b):

Config. #1 is as illustrated in Fig. 12a, with the bass dipole loudspeaker diaphragm at 2.5cm from the forward-facing opening.

Config. #2 has the bass dipole loudspeaker diaphragm at 2.5 cm from the rearward-facing opening.

Config. #3 is like Config. #1 except the bass waveguide is modified such that the forward-facing opening has an area of 200cm$^2$.

Config. #4 is like Config. #3, except the gap between the diaphragm and the forward-facing opening is 5cm.

Config. #5 is like Config. #4, except the gap between the diaphragm and the forward-facing opening is 7.5cm.

Config. #6 is like Config. #5, but the baffle parallel to the bass dipole loudspeaker is removed so that sound can enter the cavity next to the bass dipole loudspeaker.

Config. #7 is like Config. #6, but the walls of the bass waveguide are flared to further increase the area of the forward-facing opening to 400cm$^2$.

For the simulations, a bass dipole loudspeaker having a diaphragm with first and second radiating surface areas of 100cm$^2$, with constant acceleration, was assumed.

Fig. 13(a) shows the simulated particle velocity at 2cm from the forward-facing opening for each of Configs. #1-#7.

The thick line is the simulated particle velocity at 2cm from the forward-facing opening for Configs. #1-#2, which is the same since the length of the tube made no difference to the simulated particle velocity for a tube of constant cross section.

We note for completeness that the thick curve also shows the simulated particle velocity at 2cm from the rearward-facing opening for all configurations (Configs. #1-#7), since the rearward-facing openings are identical (and tube length makes no difference to the simulated particle velocity for a tube of constant cross section).

The y-axis scale in Fig. 13(a) is expressed as a % of the simulated particle velocity at 2cm from the forward-facing opening for Config. #1 at 40Hz, to make it easier to quantify the relative benefits/disadvantages of the different configurations relative to Config. #1.

From Fig. 13(a), we may conclude that increasing the forward-facing opening area together with increased distance from the bass dipole loudspeaker helps to decrease the particle velocity in proximity of the forward-facing opening.

Fig. 13(b) shows the simulated sound pressure at 10cm from the rearward-facing opening ("rear") and at 10cm from the forward-facing opening ("front") for each of Configs. #3-#7.

Note that here it is sound pressure that is shown (in % of units of Pa with reference to the sound pressure of config.1 at 40Hz on a linear scale) rather than SPL (which has units of dB on a logarithmic scale).

Curve G gives the variation of simulated sound pressure with frequency for Configs. #1-#2 (front and rear) as well as Configs. #3-#6 (all rear). The y-axis scale in Fig. 13(b) is expressed as a % of the simulated sound pressure at 10cm from the forward-facing opening for Config. #1 at 40Hz, to make it easier to quantify the relative benefits/disadvantages of the different configurations relative to Config. #1.

From the data shown in Figs. 13(a)-(b), a "tactile fizzle metric" can be calculated for each of Configs. #3-#7 as:

"tactile fizzle metric" = [% sound pressure relative to Config. 1] / [% velocity relative to Config. 1]

In this formula, the "% sound pressure relative to Config. 1" for a given configuration is the sound pressure (front) of the configuration, expressed as a % relative to the sound pressure (front) for Config. #1 at 40Hz (Curve G in Fig. 13(b) at 40Hz, labelled on the y-axis as 100%), and the "% velocity relative to Config. 1" is the particle velocity (front) of the configuration, expressed as a % relative to the particle velocity (front) for Config. #1 at 40Hz (Curve A in Fig. 13(a) at 40Hz, labelled on the y-axis as 100%).

The "tactile fizzle metric" can be understood as representing the % sound pressure relative to Config. 1 that can be produced by the current loudspeaker assembly configuration before the listener will notice "tactile fizzle".

For Config. #3, velocity is ~73% and sound pressure is ~87%, giving a tactile fizzle metric of ~120% which is a ~20% improvement over Config. 1.

For Config. #4, it can be seen that moving the bass dipole loudspeaker further backwards while keeping the increased front-facing opening area leads to a velocity of ~57% and sound pressure of ~83%, giving a tactile fizzle metric of ~145% which is a modest ~45% improvement over Config. 1.

For Configs. #5-#6, the velocity is ~52% and sound pressure is ~82%, giving a tactile fizzle metric of ~158% which is a ~58% improvement over Config. 1.

For Config. #7, the velocity is ~36% and sound pressure is ~81%, giving a tactile fizzle metric of ~225% which is a significant ~125% improvement over Config 1.

Accordingly, Figs. 13(a)-(b) illustrate that the most significant improvements can be provided by increasing the area of the front-facing opening of the bass waveguide in combination with moving the diaphragm further back in the bass waveguide.

In the examples that follow, alike features have been given alike reference numerals, and so previous descriptions of such features may apply where appropriate.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A loudspeaker assembly (1000, 1100, 1200, 1300, 1400) including:

a headrest (1010, 1110, 1210) having a front face facing in a forwards direction (F) and a rear face facing in a rearwards direction, wherein the rearwards direction (R) is opposite to the forwards direction, wherein the headrest is for use with a user's head located in front of the front face of the headrest;
a first bass dipole loudspeaker (1020a) mounted to the headrest, wherein the first bass dipole loudspeaker includes a first drive unit (1023a) and a first diaphragm (1024a), wherein the first diaphragm has a first radiating surface (1024-1a) and a second radiating surface (1024-2a), wherein the first radiating surface and the second radiating surface of the first diaphragm are located on opposite faces of the first diaphragm, wherein the first drive unit is configured to move the first diaphragm along a first movement axis (1022a) at bass frequencies such that the first and second radiating surfaces of the first diaphragm produce sound at bass frequencies;
a second bass dipole loudspeaker (1020b) mounted to the headrest, wherein the second bass dipole loudspeaker includes a second drive unit (1023b) and a second diaphragm (1024b), wherein the second diaphragm has a first radiating surface (1024-1b) and a second radiating surface (1024-2b), wherein the first radiating surface and the second radiating surface of the second diaphragm are located on opposite faces of the second diaphragm, wherein the second drive unit is configured to move the second diaphragm along a second movement axis (1022b) at bass frequencies such that the first and second radiating surfaces of the second diaphragm produce

17

sound at bass frequencies;

at least one bass waveguide (1042) configured to guide bass sound produced by the first radiating surfaces of the first and second bass dipole loudspeakers out from the front face of the headrest via at least one forward-facing opening provided by the at least one bass waveguide;

wherein the first and second bass dipole loudspeakers are mounted to the headrest with the second radiating surface of the first bass dipole loudspeaker facing towards the second radiating surface of the second bass dipole loudspeaker, and such that bass sound produced by the second radiating surfaces of the first and second bass dipole loudspeakers is able to propagate out from the rear face of the headrest;

wherein a first area (a1) is defined by the first radiating surface of the first loudspeaker as projected onto a plane perpendicular to the first movement axis;

wherein a second area (a2) is defined by the first radiating surface of the second loudspeaker as projected onto a plane perpendicular to the second movement axis;

wherein the area of the at least one forward-facing opening is larger than the sum of the first and second areas.

2. A loudspeaker assembly according to claim 1, wherein the sum of the first and second areas is 100cm$^2$ or more.

3. A loudspeaker assembly according to claim 1 or claim 2, wherein the area of the at least one forward-facing opening of the at least one bass waveguide is at least 2 times larger than the sum of the first and second areas.

4. A loudspeaker assembly according to any previous claim, wherein the first and second bass dipole loudspeakers are mounted to the headrest such that a shortest distance between the first radiating surfaces of the first and second bass dipole loudspeakers and the rear face of the headrest is smaller than the shortest distance between the first radiating surfaces of the first and second bass dipole loudspeakers and the front face of the headrest.

5. A loudspeaker assembly according to any previous claim, wherein the headrest includes one or more mounting pins (1012) for mounting the headrest to a seat, and wherein the first and second bass dipole loudspeakers are mounted to the headrest in a position such that the first and second drive units of the first and second dipole loudspeakers are rearwards of the one or more mounting pins.

6. A loudspeaker assembly according to any previous claim, wherein the first and second bass dipole loudspeakers are included in a loudspeaker module (1170), wherein the loudspeaker module is mounted in the headrest.

7. A loudspeaker assembly according to claim 6, wherein the loudspeaker module includes a skirt that extends between a periphery of the first bass dipole loudspeaker and a periphery of the second bass dipole loudspeaker, wherein the skirt serves as a barrier (1050) which separates a space formed between the second radiating surfaces of the first and second bass dipole loudspeakers from the at least one forward-facing opening provided by the at least one bass waveguide.

8. A loudspeaker assembly according to claim 7, wherein the loudspeaker module is mounted in the headrest such that an opening in the skirt of the loudspeaker module is located at the rear face of the headrest.

9. A loudspeaker assembly according to any previous claim, wherein the first and second bass dipole loudspeakers are mounted to the headrest such that the first and second movement axes are parallel to each other.

10. A loudspeaker assembly according to any of claims 1 to 8, wherein the first and second bass dipole loudspeakers are mounted to the headrest such that the first and second movement axes are both inclined at 70 degrees or less from a plane perpendicular to the forwards direction such that the first radiating surfaces of the first and second bass dipole loudspeakers are inclined towards the front face of the headrest.

11. A loudspeaker assembly according to any previous claim, wherein the headrest includes a single bass waveguide configured to guide bass sound produced by the first radiating surfaces of the first and second bass dipole loudspeakers out from the front face of the headrest via the at least one forward-facing opening provided by the at least one bass waveguide.

12. A loudspeaker assembly according to any of claims 1 - 10, wherein the headrest includes a first bass waveguide and a second bass waveguide, wherein the first bass waveguide is configured to guide bass sound produced by the first radiating surface of the first bass dipole loudspeaker out from the front face of the headrest via a first forward-facing opening provided by the first bass waveguide, and wherein the second bass waveguide is configured to guide bass sound produced by the first radiating surface of the second bass dipole loudspeaker out from the front face of the headrest via a second forward-facing opening provided by the second bass waveguide

13. A loudspeaker assembly according to any previous claim, wherein the headrest includes a rigid chassis (1040), wherein the at least one bass waveguide is formed at least in part by the rigid chassis.

14. A loudspeaker assembly according to any previous claim, wherein the headrest includes one or more mid-high frequency loudspeakers (1030a-b, 2030b-d).

15. A seat assembly that comprises:

a seat for seating a user; and
a loudspeaker assembly (1000, 1100, 1200, 1300, 1400) according to any previous claim, wherein the headrest of the loudspeaker assembly is used as a headrest of the seat.

**Patentansprüche**

1. Lautsprecheranordnung (1000, 1100, 1200, 1300, 1400), umfassend:

eine Kopfstütze (1010, 1110, 1210) mit einer Vorderseite, die in eine Vorwärtsrichtung (F) gewandt ist, und einer Rückseite, die in eine Rückwärtsrichtung gewandt ist, wobei die Rückwärtsrichtung (R) zu der Vorwärtsrichtung entgegengesetzt ist, wobei die Kopfstütze derart zu verwenden ist, dass der Kopf eines Benutzers vor der Vorderseite der Kopfstütze angeordnet ist;
einen ersten Bass-Dipollautsprecher (1020a), der an der Kopfstütze montiert ist, wobei der erste Bass-Dipollautsprecher eine erste Antriebseinheit (1023a) und eine erste Membran (1024a) umfasst, wobei die erste Membran eine erste Abstrahlfläche (1024-1a) und eine zweite Abstrahlfläche (1024-2a) aufweist, wobei die erste Abstrahlfläche und die zweite Abstrahlfläche der ersten Membran auf entgegengesetzten Seiten der ersten Membran angeordnet sind, wobei die erste Antriebseinheit dazu ausgelegt ist, die erste Membran bei Bassfrequenzen entlang einer ersten Bewegungsachse (1022a) derart zu bewegen, dass die erste und die zweite Abstrahlfläche der ersten Membran bei Bassfrequenzen Klang erzeugen;
einen zweiten Bass-Dipollautsprecher (1020b), der an der Kopfstütze montiert ist, wobei der zweite Bassdipollautsprecher eine zweite Antriebseinheit (1023b) und eine zweite Membran (1024b) umfasst, wobei die zweite Membran eine erste Abstrahlfläche (1024-1b) und eine zweite Abstrahlfläche (1024-2b) aufweist, wobei die erste Abstrahlfläche und die zweite Abstrahlfläche der zweiten Membran auf entgegengesetzten Seiten der zweiten Membran angeordnet sind, wobei die zweite Antriebseinheit dazu ausgelegt ist, die zweite Membran bei Bassfrequenzen entlang einer zweiten Bewegungsachse (1022b) derart zu bewegen, dass die erste und die zweite Abstrahlfläche der zweiten Membran bei Bassfrequenzen Klang erzeugen;
zumindest einen Basswellenleiter (1042), der dazu ausgelegt ist, Bassklang, der von den ersten Abstrahlflächen des ersten und zweiten Bass-Dipollautsprechers erzeugt wird, über zumindest eine nach vorne gewandte Öffnung, die durch den zumindest einen Basswellenleiter bereitgestellt ist, aus der Vorderseite der Kopfstütze herauszuleiten;
wobei der erste und zweite Bass-Dipollautsprecher derart an der Kopfstütze montiert sind, dass die zweite Abstrahlfläche des ersten Bass-Dipollautsprechers hin zu der zweiten Abstrahlfläche des zweiten Bass-Dipollautsprechers gewandt ist, und dass Bassklang, der von den zweiten Abstrahlflächen des ersten und zweiten Bass-Dipollautsprechers erzeugt wird, sich aus der Hinterseite der Kopfstütze heraus ausbreiten kann;
wobei eine erste Fläche (a1) durch die erste Abstrahlfläche des ersten Lautsprechers definiert ist, wenn sie auf eine Ebene senkrecht auf die erste Bewegungsachse projiziert wird;
wobei eine zweite Fläche (a2) durch die erste Abstrahlfläche des zweiten Lautsprechers definiert ist, wenn sie auf eine Ebene senkrecht auf die zweite Bewegungsachse projiziert wird;
wobei die Fläche der zumindest einen nach vorne gewandten Öffnung größer ist als die Summe der ersten und der zweiten Fläche.

2. Lautsprecheranordnung nach Anspruch 1, wobei die Summe der ersten und der zweiten Fläche 100 cm$^2$ oder mehr beträgt.

3. Lautsprecheranordnung nach Anspruch 1 oder 2, wobei die Fläche der zumindest einen nach vorne gewandten Öffnung des zumindest einen Basswellenleiters zumindest zweimal größer als die Summe der ersten und der zweiten Fläche ist.

4. Lautsprecheranordnung nach einem der vorangegangenen Ansprüche, wobei der erste und zweite Bass-Dipollautsprecher derart an der Kopfstütze montiert sind, dass ein kürzester Abstand zwischen den ersten Abstrahlflächen des ersten und zweiten Bass-Dipollautsprechers und der Rückseite der Kopfstütze kleiner als der kürzeste Abstand zwischen den ersten Abstrahlflächen des ersten und zweiten Bass-Dipollautsprechers und der Vorderseite der Kopfstütze ist.

5. Lautsprecheranordnung nach einem der vorangegangenen Ansprüche, wobei die Kopfstütze einen oder mehrere Montagestifte (1012) zum Montieren der Kopfstütze an einem Sitz umfasst, und wobei der erste und zweite Bass-Dipollautsprecher in einer Position an der Kopfstütze montiert sind, in der die erste und zweite Antriebseinheit des ersten und zweiten Bass-Dipollautsprechers hinter dem einen oder den mehreren Montagestiften sind.

6. Lautsprecheranordnung nach einem der vorangegangenen Ansprüche, wobei der erste und zweite Bass-Dipollautsprecher in einem Lautsprechermodul (1170) enthalten sind, wobei das Lautsprechermodul in der Kopfstütze montiert ist.

7. Lautsprecheranordnung nach Anspruch 6, wobei das Lautsprechermodul eine Schürze umfasst, die sich zwischen einem Umfang des ersten Bass-Dipollautsprechers und einem Umfang des zweiten Bass-Dipollautsprechers erstreckt, wobei die Schürze als Barriere (1050) dient, die einen zwischen den zweiten Abstrahlflächen des ersten und zweiten Bass-Dipollautsprechers ausgebildeten Raum von zumindest einer nach vorne gewandten Öffnung, die durch den zumindest einen Basswellenleiter bereitgestellt ist, trennt.

8. Lautsprecheranordnung nach Anspruch 7, wobei das Lautsprechermodul derart in der Kopfstütze montiert ist, dass eine Öffnung in der Schürze des Lautsprechermoduls auf der Rückseite der Kopfstütze angeordnet ist.

9. Lautsprecheranordnung nach einem der vorangegangenen Ansprüche, wobei der erste und zweite Bass-Dipollautsprecher derart an der Kopfstütze montiert sind, dass die erste und zweite Bewegungsachse parallel zueinander sind.

10. Lautsprecheranordnung nach einem der Ansprüche 1 bis 8, wobei der erste und zweite Bass-Dipollautsprecher derart an der Kopfstütze montiert sind, dass die erste und zweite Bewegungsachse 70 ° oder weniger von einer Ebene senkrecht auf die Vorwärtsrichtung geneigt sind, sodass die ersten Abstrahlflächen des ersten und zweiten Bass-Dipollautsprechers hin zu der Vorderseite der Kopfstütze geneigt sind.

11. Lautsprecheranordnung nach einem der vorangegangenen Ansprüche, wobei die Kopfstütze einen einzigen Basswellenleiter umfasst, der dazu ausgelegt ist, Bassklang, der von den ersten Abstrahlflächen des ersten und zweiten Bassdipollautsprechers erzeugt wurde, über zumindest eine nach vorne gewandte Öffnung, die durch den zumindest einen Basswellenleiter bereitgestellt ist, aus der Vorderseite der Kopfstütze herauszuleiten.

12. Lautsprecheranordnung nach einem der Ansprüche 1 bis 10, wobei die Kopfstütze einen ersten Basswellenleiter und einen zweiten Basswellenleiter umfasst, wobei der erste Basswellenleiter dazu ausgelegt ist, Bassklang, der von der ersten Abstrahlfläche des ersten Bass-Dipollautsprechers erzeugt wurde, über eine erste nach vorne gewandte Öffnung, die durch den ersten Basswellenleiter bereitgestellt ist, aus der Vorderseite der Kopfstütze herauszuleiten, und wobei der zweite Basswellenleiter dazu ausgelegt ist, Bassklang, der von der ersten Abstrahlfläche des zweiten Bass-Dipollautsprechers erzeugt wurde, über eine zweite nach vorne gewandte Öffnung, die durch den zweiten Basswellenleiter bereitgestellt ist, aus der Vorderseite der Kopfstütze herauszuleiten.

13. Lautsprecheranordnung nach einem der vorangegangenen Ansprüche, wobei die Kopfstütze ein starres Chassis (1040) umfasst, wobei der zumindest eine Basswellenleiter zumindest teilweise durch das starre Chassis ausgebildet ist.

14. Lautsprecheranordnung nach einem der vorangegangenen Ansprüche, wobei die Kopfstütze einen oder mehrere Mittelhochfrequenzlautsprecher (1030a-b, 2030b-d) umfasst.

15. Sitzanordnung, die Folgendes umfasst:

einen Sitz zum Aufnehmen eines Benutzers; und
eine Lautsprecheranordnung (1000, 1100, 1200, 1300, 1400) nach einem der vorangegangenen Ansprüche, wobei die Kopfstütze der Lautsprecheranordnung als Kopfstütze des Sitzes verwendet wird.

**Revendications**

1. Ensemble de haut-parleurs (1000, 1100, 1200, 1300, 1400), incluant :

   un appui-tête (1010, 1110, 1210) présentant une face avant orientée dans une direction vers l'avant (F) et une face arrière orientée dans une direction vers l'arrière, dans lequel la direction vers l'arrière (R) est opposée à la direction vers l'avant, dans lequel l'appui-tête est destiné à être utilisé avec la tête d'un utilisateur située devant la face avant de l'appui-tête ;
   un premier haut-parleur dipôle de basses (1020a) monté sur l'appui-tête, dans lequel le premier haut-parleur dipôle de basses inclut une première unité d'entraînement (1023a) et une première membrane (1024a), dans lequel la première membrane présente une première surface rayonnante (1024-1a) et une seconde surface rayonnante (1024-2a), dans lequel la première surface rayonnante et la seconde surface rayonnante de la première membrane sont situées sur des faces opposées de la première membrane, dans lequel la première unité d'entraînement est configurée pour déplacer la première membrane le long d'un premier axe de déplacement (1022a) à des fréquences de basses de telle sorte que les première et seconde surfaces rayonnantes de la première membrane produisent un son à des fréquences de basses ;
   un second haut-parleur dipôle de basses (1020b) monté sur l'appui-tête, dans lequel le second haut-parleur dipôle de basses inclut une seconde unité d'entraînement (1023b) et une seconde membrane (1024b), dans lequel la seconde membrane présente une première surface rayonnante (1024-1b) et une seconde surface rayonnante (1024-2b), dans lequel la première surface rayonnante et la seconde surface rayonnante de la seconde membrane sont situées sur des faces opposées de la seconde membrane, dans lequel la seconde unité d'entraînement est configurée pour déplacer la seconde membrane le long d'un second axe de déplacement (1022b) à des fréquences de basses de sorte que les première et seconde surfaces rayonnantes de la seconde membrane produisent un son à des fréquences de basses ;
   au moins un guide d'ondes de basses (1042) configuré pour guider le son de basses produit par les premières surfaces rayonnantes des premier et second haut-parleurs dipôles de basses hors de la face avant de l'appui-tête via au moins une ouverture orientée vers l'avant fournie par le au moins un guide d'ondes de basses ;
   dans lequel les premier et second haut-parleurs dipôles de basses sont montés sur l'appui-tête avec la seconde surface rayonnante du premier haut-parleur dipôle de basses orientée vers la seconde surface rayonnante du second haut-parleur dipôle de basses, et de telle sorte que le son de basses produit par les secondes surfaces rayonnantes des premier et second haut-parleurs dipôles de basses est capable de se propager vers l'extérieur depuis la face arrière de l'appui-tête ;
   dans lequel une première aire (a1) est définie par la première surface rayonnante du premier haut-parleur telle que projetée sur un plan perpendiculaire au premier axe de déplacement ;
   dans lequel une seconde aire (a2) est définie par la première surface rayonnante du second haut-parleur telle que projetée sur un plan perpendiculaire au second axe de déplacement ;
   dans lequel l'aire de la au moins une ouverture orientée vers l'avant est plus grande que la somme des première et seconde aires.

2. Ensemble de haut-parleurs selon la revendication 1, dans lequel la somme des première et seconde aires est de 100 cm$^2$ ou plus.

3. Ensemble de haut-parleurs selon la revendication 1 ou la revendication 2, dans lequel l'aire de la au moins une ouverture orientée vers l'avant du au moins un guide d'ondes de basses est au moins 2 fois plus grande que la somme des première et seconde aires.

4. Ensemble de haut-parleurs selon l'une quelconque des revendications précédentes, dans lequel les premier et second haut-parleurs dipôles de basses sont montés sur l'appui-tête de telle sorte qu'une distance la plus courte entre les premières surfaces rayonnantes des premier et second haut-parleurs dipôles de basses et la face arrière de l'appui-tête est inférieure à la distance la plus courte entre les premières surfaces rayonnantes des premier et second haut-parleurs dipôles de basses et la face avant de l'appui-tête.

5. Ensemble de haut-parleurs selon l'une quelconque des revendications précédentes, dans lequel l'appui-tête inclut une ou plusieurs broches de montage (1012) pour monter l'appui-tête sur un siège, et dans lequel les premier et second haut-parleurs dipôles de basses sont montés sur l'appui-tête dans une position telle que les première et seconde unités d'entraînement des premier et second haut-parleurs dipôles sont en arrière des une ou plusieurs broches de montage.

6.  Ensemble de haut-parleurs selon l'une quelconque des revendications précédentes, dans lequel les premier et second haut-parleurs dipôles de basses sont inclus dans un module de haut-parleurs (1170), dans lequel le module de haut-parleurs est monté dans l'appuie-tête.

7.  Ensemble de haut-parleurs selon la revendication 6, dans lequel le module de haut-parleurs inclut une jupe qui s'étend entre une périphérie du premier haut-parleur dipôle de basses et une périphérie du second haut-parleur dipôle de basses, dans lequel la jupe sert de barrière (1050) qui sépare un espace, formé entre les secondes surfaces rayonnantes des premier et second haut-parleurs dipôle de basses, de la au moins une ouverture orientée vers l'avant fournie par le au moins un guide d'ondes de basses.

8.  Ensemble de haut-parleurs selon la revendication 7, dans lequel le module de haut-parleurs est monté dans l'appui-tête de telle sorte qu'une ouverture dans la jupe du module de haut-parleurs soit située au niveau de la face arrière de l'appui-tête.

9.  Ensemble de haut-parleurs selon l'une quelconque des revendications précédentes, dans lequel les premier et second haut-parleurs dipôles de basses sont montés sur l'appui-tête de telle sorte que les premier et second axes de déplacement soient parallèles l'un à l'autre.

10. Ensemble de haut-parleurs selon l'une quelconque des revendications 1 à 8, dans lequel les premier et second haut-parleurs dipôles de basses sont montés sur l'appui-tête de telle sorte que les premier et second axes de déplacement soient tous deux inclinés à 70 degrés ou moins par rapport à un plan perpendiculaire à la direction avant, de sorte que les premières surfaces rayonnantes des premier et second haut-parleurs dipôles de basses soient inclinées vers la face avant de l'appui-tête.

11. Ensemble de haut-parleurs selon l'une quelconque des revendications précédentes, dans lequel l'appui-tête inclut un guide d'ondes de basses unique configuré pour guider le son de basses produit par les premières surfaces rayonnantes des premier et second haut-parleurs dipôles de basses hors de la face avant de l'appui-tête via au moins une ouverture orientée vers l'avant fournie par le au moins un guide d'ondes de basses.

12. Ensemble de haut-parleurs selon l'une quelconque des revendications 1 à 10, dans lequel l'appui-tête inclut un premier guide d'ondes basses et un second guide d'ondes basses, dans lequel le premier guide d'ondes basses est configuré pour guider le son de basses produit par la première surface rayonnante du premier haut-parleur dipôle de basses hors de la face avant de l'appui-tête via une première ouverture orientée vers l'avant fournie par le premier guide d'ondes basses, et dans lequel le second guide d'ondes de basses est configuré pour guider le son de basses produit par la première surface rayonnante du second haut-parleurs dipôle de basse hors de la face avant de l'appui-tête via une seconde ouverture orientée vers l'avant fournie par le second guide d'ondes de basses.

13. Ensemble de haut-parleur selon l'une quelconque des revendications précédentes, dans lequel l'appui-tête comprend un châssis rigide (1040), dans lequel au moins un guide d'ondes de basses est formé au moins en partie par le châssis rigide.

14. Ensemble de haut-parleurs selon l'une quelconque des revendications précédentes, dans lequel l'appui-tête inclut un ou plusieurs haut-parleurs de fréquence moyenne-élevée (1030a-b, 2030b-d).

15. Ensemble de siège, qui comprend :

    un siège permettant à un utilisateur de s'asseoir ; et
    un ensemble de haut-parleur (1000, 1100, 1200, 1300, 1400) selon l'une quelconque des revendications précédentes, dans lequel l'appui-tête de l'ensemble de haut-parleurs est utilisé comme appui-tête du siège.

FIG. 1(a)

FIG. 1(b)

FIG. 1(c)

FIG. 2

1120a

FIG. 3(a)

1120b

FIG. 3(b)

FIG. 4

FIG. 5

FIG. 6

FIG. 7

FIG. 8

SPL on axis versus frequency

FIG. 9(a)

urms(r) versus frequency

FIG. 9(b)

Fizzle threshold voltage

----- Subjective fizzle threshold ——Poly. (Subjective fizzle threshold)

FIG. 10(a)

Fizzle threshold velocity

—— Poly. (Fizzle threshold)

FIG. 10(b)

FIG. 11

Config. #1

Rear pressure @ 10cm

Rear velocity @ 2cm

100cm²

10cm

2,5cm

Front velocity @ 2cm

Front pressure @ 10cm

FIG. 12(a)

Config. #1

Config. #2

Config. #3

2,5cm

200cm$^2$

Config. #4

Config. #5

Config. #6

5cm

5cm

2,5cm

Config. #7

400cm$^2$

FIG. 12(b)

2cm velocity % ref. configuration 1 @ 40Hz

FIG. 13(a)

10cm pressure % ref. configuration 1 @ 40Hz

FIG. 13(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2300679 A
- WO 2019121266 A
- WO 2021249843 A
- WO 2022048810 A
- WO 2022048956 A
- WO 2021185777 A
- WO 2023030847 A
- WO 2023083711 A
- WO 2019192816 A
- US 2020247295 A
- US 2015201260 A
- JP 2008188099 A
- WO 2023174574 A

**Non-patent literature cited in the description**

- Dynamical Measurement of the Effective Radiating area SD. *Klippel GmbH*, https://www.klippel.de/fileadmin/klippel/Files/Know_How/Application_Notes/AN_32_Effective_Radiation_ Area.pdf